# EUROPEAN PATENT SPECIFICATION

(11) **EP 3 268 861 B1**
(45) Date of publication and mention of the grant of the patent: **01.07.2020**
(21) Application number: 15711876.1
(22) Date of filing: 09.03.2015
(51) Int. Cl.: G06F 9/54, H04L 29/08, H04W 4/00

(54) **DYNAMIC EVENT SUBSCRIPTIONS FOR M2M COMMUNICATION**
DYNAMISCHE EREIGNISABONNEMENTS FÜR M2M-KOMMUNIKATION
ABONNEMENTS À DES ÉVÉNEMENTS DYNAMIQUES DE COMMUNICATION DE M2M

(43) Date of publication of application: 17.01.2018
(73) Proprietor: Telefonaktiebolaget LM Ericsson (publ), 164 83 Stockholm (SE)
(72) Inventor: FOTI, George, Dollard des Ormeaux, Québec H9G 2Z8 (CA)
(74) Representative: Ericsson
(86) International application number: PCT/IB2015/051713
(87) International publication number: WO 2016/142741

(56) References cited:
- US-A1- 2013 066 965
- US-A1- 2014 237 055
- ROACH DYNAMICSOFT A B: "Session Initiation Protocol (SIP)-Specific Event Notification; rfc3265.txt", 5. JCT-VC MEETING; 96. MPEG MEETING; 16-3-2011 - 23-3-2011; GENEVA; (JOINT COLLABORATIVE TEAM ON VIDEO CODING OF ISO/IEC JTC1/SC29/WG11 AND ITU-T SG.16 ); URL: HTTP://WFTP3.ITU.INT/AV-ARCH/JCTVC-SITE/, INTERNET ENGINEERING TASK FORCE, IETF, CH, 1 June 2002 (2002-06-01), XP015009043, ISSN: 0000-0003
- Onem2m: "OneM2M Technical Specification: Functional Architecture TS-0001-v1.6.1" In: "Functional Architecture", 30 January 2015 (2015-01-30), Onem2m, XP055226935, pages 1-321, page 19; figures 6.1-1 ch. 6.2.6; page 30 - page 31 6.2.12; page 36 ch. 10.1.4.1; page 155 - page 157 figures 10.1.4-1 ch. 10.2.11.1; page 202 ch. 10.2.11.5; page 204 tables table 10.2.11.5-1

## Description

### Technical Field

The present disclosure relates to Machine-to-Machine (M2M) communication and, in particular, to event subscriptions in a M2M system.

### Background

Machine-to-Machine (M2M) communications and the Internet of Things (loT) are expected to experience rapid growth in the coming years. In an effort to enable this growth, "OneM2M Technical Specification: Functional Architecture TS-0001-v1.6.1" In: "Functional Architecture", 30 January 2015 (2015-01-30), Onem2m, XP055226935, pages 1-321 has emerged as a set of standards for M2M and the loT. In particular, oneM2M standardizes a common services layer for M2M communication. OneM2M is designed not to replace existing sector or industry M2M technology, but to work with existing sector and industry M2M technology to extend their reach. Thus, oneM2M is said to be an inter-operability enabler for the entire M2M ecosystem.

In the current oneM2M architecture, it is possible to create a subscription at a hosting Common Services Entity (CSE) for an event such that notifications regarding that event are sent to some other entity (referred to as a recipient) than the one that created the subscription (referred to as a subscription originator). It is also possible to specify more than one recipient for the subscription. However, the current oneM2M architecture lacks the flexibility to remove notification recipients when those recipients indicate that they are not interested in receiving notifications of the event or easily managing large numbers of notification recipients.

ROACH DYNAMICSOFT A B: "Session Initiation Protocol (SIP)-Specific Event Notification; rfc3265.txt" in 5. JCT-VC MEETING; 96. MPEG MEETING; 16-3-2011 - 23-3-2011; GENEVA; (JOINT COLLABORATIVE TEAM ON VIDEO CODING OF ISO/IEC JTC1/SC29/WG11 AND ITU-T SG.16); URL: HTTP://WFTP3.ITU.INT/AV-ARCH/JCTVC-SITE/, INTERNET ENGINEERING TASK FORCE; IETF, CH, 1 June 2002 (2002-06-01), XP015009043, ISSN: 0000-0003) describes an extension to the Session Initiation Protocol (SIP) to provide an extensible framework by which SIP nodes can request notification from remote nodes indicating that certain events have occurred. The general concept is that entities in the network can subscribe to resource or call state for various resources or calls in the network.

US 2013/066965 A1 relates to systems and methods that bundle subscriptions associated with a M2M device or M2M application into a single hypertext transport protocol (HTTP) session. One method discloses subscribing to an M2M device by a gateway on behalf of a plurality of subscribers using a single HTTP session.

Document US2014/237055 relates to a solution wherein a removal command from a specific recipient address, which is not authorized to update the distribution list, causes the specific recipient address to be removed from the distribution list. The requesting address can be used to determine whether the requesting user is authorized to remove recipients from the distribution list.

Systems and methods are disclosed herein relating to subscriptions to notifications of events in a Machine-to-Machine (M2M) communications system. In some embodiments, systems and methods for flexibly and securely enabling removal of event notification recipients are disclosed. More specifically, embodiments of a method of operation of a node in a M2M communications system to enable removal of a notification recipient are disclosed. In some embodiments, the method of operation of the node comprises sending a notification of an event to one or more recipients. The one or more recipients are subscribed to notifications of the event by a subscription originator and are different than the subscription originator. The method further comprises receiving a removal request from a recipient, determining whether removal of the recipient as a recipient of notifications of the event is permitted based on a removal policy for the recipient, and removing the recipient as a recipient of notifications of the event upon determining that removal of the recipient as a recipient of notifications of the event is permitted. In some embodiments, the removal policy is defined by the subscription originator. In this manner, removal of the recipient can be controlled in a secure way while also providing flexibility and control to the subscription originator.

In some embodiments, the method further comprises denying removal of the recipient as a recipient of notifications of the event upon determining that removal of the recipient as a recipient of notifications of the event is not permitted.

In some embodiments, the removal policy indicates whether approval of the subscription originator is required before removal of the recipient is permitted. In some embodiments, the removal policy indicates that approval of the subscription originator is not required before removal of the recipient is permitted, and determining whether removal of the recipient as a recipient of notifications of the event is permitted comprises determining whether removal of the recipient as a recipient of notifications of the event is permitted without input from the subscription originator. In other embodiments, the removal policy indicates that approval of the subscription originator is required before removal of the recipient is permitted, and determining whether removal of the recipient as a recipient of notifications of the event is permitted comprises requesting approval to remove the recipient as a recipient of notifications of the event from the subscription originator and determining that removal of the recipient as a recipient of notifications of the event is permitted upon receiving approval from the subscription originator.

In some embodiments, the removal policy comprises one or more defined criteria that must be satisfied before removal of the recipient as a recipient of notifications of the event is permitted. Further, in some embodiments, the one or more defined criteria comprise a time of day at which the event occurs and/or a geographic location of the recipient.

In some embodiments, the removal policy of the recipient further comprises one or more criteria for automatically adding the recipient back as a recipient of notifications of the event, and the method further comprises, after removing the recipient as a recipient of notifications of the event, adding the recipient back as a recipient of notifications of the event upon determining that the one or more criteria for automatically adding the recipient back as a recipient of notifications of the event are satisfied.

In some embodiments, the one or more recipients comprise a plurality of recipients, and a separate removal policy is defined for each of at least two of the plurality of recipients.

In some embodiments, the method further comprises, prior to sending the notification to the recipient, determining whether the notification is to be sent to the recipient based on a notification policy of the recipient, and sending the notification to the recipient comprises sending the notification to the recipient upon determining that the notification is to be sent to the recipient based on the notification policy of the recipient. Further, in some embodiments, the notification policy of the recipient is based on one or more defined criteria. In some embodiments, the one or more defined criteria comprise time of day and/or geographic location of the recipient.

In some embodiments, the method further comprises, prior to sending the notification of the event to the one or more recipients, receiving a subscription to notifications of the event from the subscription originator, wherein the subscription is a subscription to notifications of the event for the one or more recipients and the subscription comprises the removal policy for the recipient.

In some embodiments, the method further comprises receiving a request to create a group comprising the one or more recipients, responding to the request to create the group with a group identifier for the group, and receiving a notification of the event with the group identifier as an identifier of a recipient for the notification, wherein sending the notification of the event to the one or more recipients comprises sending the notification of the event to the one or more recipients in the group in response to receiving the notification of the event with the group identifier as the identifier of the recipient for the notification. Further, in some embodiments, the notification of the event sent to the one or more recipients in the group comprises the group identifier. In some embodiments, removing the recipient as a recipient of notifications of the event comprises removing the recipient as a recipient of notifications of the event but not from the group.

In some embodiments, the one or more recipients is a subset of a plurality of recipients in the group, and the method further comprises receiving a notification of a different event with the group identifier being an identifier of a recipient of the notification of the different event and one or more policies for the notification of the different event and sending the notification of the different event to a subset of the plurality of recipients in the group according to the one or more policies for the notification of the different event. Further, in some embodiments, the method further comprises receiving one or more notification policies for the recipients in the group for notifications of the different event, wherein the one or more notification policies for the recipients in the group for notifications of the different event identify at least one of the plurality of recipients in the group that is not to receive notifications of the different event.

Embodiments of a node in a M2M communications system that enables removal of a notification recipient are also disclosed.

Those skilled in the art will appreciate the scope of the present disclosure and realize additional aspects thereof after reading the following detailed description of the embodiments in association with the accompanying drawing figures.

### Brief Description of the Drawings

The accompanying drawing figures incorporated in and forming a part of this specification illustrate several aspects of the disclosure, and together with the description serve to explain the principles of the disclosure.
Figure 1 illustrates a Machine-to-Machine (M2M) architecture currently defined by the oneM2M standards;
Figure 2 illustrates configurations supported by the M2M architecture of Figure 1;
Figures 3A and 3B illustrate two examples of an M2M system that operates to provide flexible removal of a recipient(s) of notifications of an event according to some embodiments of the present disclosure;
Figure 4 illustrates the operation of the M2M system of Figure 3A according to some embodiments of the present disclosure;
Figure 5 is a flow chart that illustrates applying the removal policy step of Figure 4 in more detail according to some embodiments of the present disclosure;
Figures 6A and 6B illustrate the operation of the Common Services Entity (CSE) to process a remove request from the recipient according to the process of Figure 5 according to some embodiments of the present disclosure;
Figure 7 is a flow chart that illustrates an automatic add-back feature that is, in some embodiments, used to automatically add a previously removed recipient back as a recipient of notifications of the event according to some embodiments of the present disclosure;
Figure 8 is a flow chart that illustrates the operation of the CSE to apply a notification policy and, as a result of the notification policy, either send or not send a notification of the event to the recipient according to some embodiments of the present disclosure;
Figure 9A and 9B illustrate the operation of the M2M system of Figure 3B according to some embodiments of the present disclosure;
Figure 10 is a flow chart that illustrates applying the removal policy step of Figure 9B in more detail according to some embodiments of the present disclosure;
Figure 11A and 11B illustrate the operation of the group management server to process a remove request from the recipient according to the process of Figure 10 according to some embodiments of the present disclosure;
Figure 12 is a flow chart that illustrates the operation of the group management server to apply a notification policy and, as a result of the notification policy, either send or not send a notification of the event to the recipients in the group according to some embodiments of the present disclosure;
Figure 13 illustrates the operation of the M2M system of Figure 3B to enable additional subscriptions (i.e., in addition to, e.g., the subscription of Figures 9A and 9B) using the same group-Identifier (ID) according to some embodiments of the present disclosure;
Figure 14 illustrates the operation of the M2M system of Figure 3B according to some other embodiments of the present disclosure;
Figures 15A and 15B illustrate two examples of a removal process according to some embodiments of the present disclosure;
Figure 16 is a block diagram of a node according to some embodiments of the present disclosure;
Figure 17 illustrates the node according to some other embodiments of the present disclosure; and
Figure 18 illustrates the node according to some other embodiments of the present disclosure.

### Detailed Description

The embodiments set forth below represent information to enable those skilled in the art to practice the embodiments and illustrate the best mode of practicing the embodiments. Upon reading the following description in light of the accompanying drawing figures, those skilled in the art will understand the concepts of the disclosure and will recognize applications of these concepts not particularly addressed herein. It should be understood that these concepts and applications fall within the scope of the disclosure and the accompanying claims.

A common services layer for Machine-to-Machine (M2M) communication is defined by a set of standards prepared, approved, and maintained by oneM2M. These standards are referred to herein as the oneM2M standards. Notably, while the embodiments described herein focus on oneM2M, the present disclosure is not limited to the oneM2M standards or to systems implementing the oneM2M standards. Rather, the systems and methods disclosed herein may be implemented in any suitable M2M system.

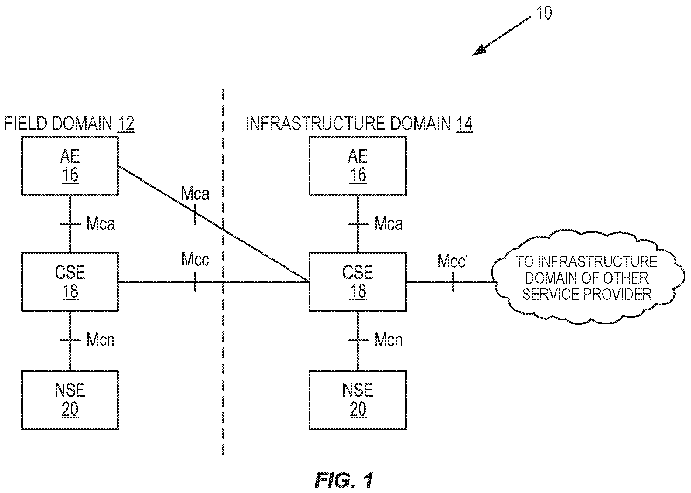

A M2M architecture 10 currently defined by the oneM2M standards is illustrated in Figure 1. As illustrated, the M2M architecture 10 includes a field domain 12 and an infrastructure domain 14. As defined in the oneM2M standards, the field domain 12 consists of M2M devices, M2M gateways, sensing and actuation equipment, and M2M area networks, whereas the infrastructure domain 14 consists of application infrastructure and M2M service infrastructure. The field domain 12 generally includes multiple nodes (not illustrated) each including one or more of an Application Entity (AE) 16, a Common Services Entity (CSE) 18, and a Network Services Entity (NSE) 20. The oneM2M standards, specifically oneM2M Technical Specification (TS) 0001 version 1.6.1, define the AE 16 as follows:
Application entity is an entity in the application layer that implements an M2M application service logic. Each application service logic can be resident in a number of M2M nodes and/or more than once on a single M2M node. Each execution instance of an application service logic is termed an "Application Entity" (AE) and is identified with a unique AE-ID (see clause 7.1.2). Examples of AEs include an instance of a fleet tracking application, a remote blood sugar monitoring application, a power metering application, or a controlling application.
The oneM2M standards, specifically oneM2M TS 0001 version 1.6.1, define the CSE 18 as follows:
A Common Services Entity represents an instantiation of a set of "common service functions" of the M2M environments. Such service functions are exposed to other entities through the Mca and Mcc reference points. Reference point Mcn is used for accessing underlying Network Service Entities. Each Common Service Entity is identified with a unique CSE-ID (see clause 7.1.4).
Examples of service functions offered by CSE include: Data Management, Device Management, M2M Service Subscription Management, and Location Services. Such "sub-functions" offered by a CSE may be logically and informatively conceptualized as Common Services Functions (CSFs). The normative Resources which implement the service functions in a CSE can be mandatory or optional.
Some Common Services Functions (CSFs) provided by the CSE 18 may include, for example, application and service layer management, communication management/delivery handling, data management and repository, device management, discovery, group management, location, network service exposure/service execution and triggering, registration, security service charging and accounting, and subscription and notification. The oneM2M standards, specifically oneM2M TS 0001 version 1.6.1, define the NSE 20 as follows:
A Network Services Entity provides services from the underlying network to the CSEs. Examples of such services include device management, location services and device triggering. No particular organization of the NSEs is assumed.
In a similar manner, the infrastructure domain 14 also includes an AE 16, a CSE 18, and a NSE 20.

Communication flows between the AE 16 and the CSE 18 cross the Mca reference point and enable the AE 16 to use the services supported by the CSE 18 and further enable the CSE 18 to communicate with the AE 16. Communication flows between two CSEs 18 cross the Mcc reference point and enable a CSE 18 to use the services supported by another CSE 18. Communication flows between the CSE 18 and the NSE 20 cross the Mcn reference point and enable the CSE 18 to use the supported services other than transport and connectivity services provided by the NSE 20. Communication flows between two CSEs 18 in Infrastructure Nodes (INs) that are oneM2M compliant and that reside in different M2M service provider domains cross the Mcc' reference point. The communication flows crossing the Mcc' reference point enable the CSE 18 of an IN residing in the infrastructure domain 14 of a service provider to communicate with the CSE 18 of an IN residing in the infrastructure domain of another service provider (not shown).

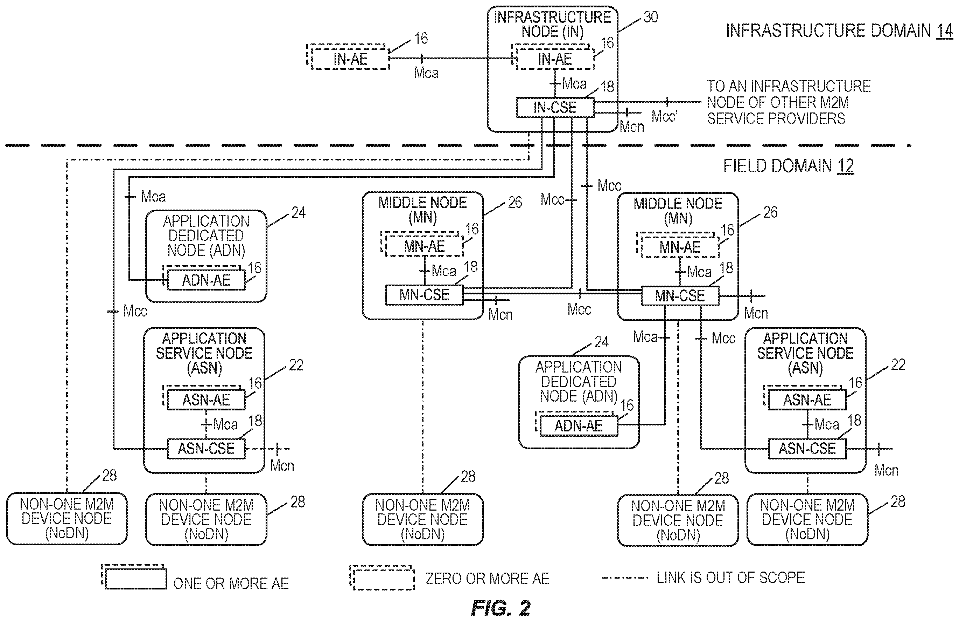

As described in oneM2M TS 0001 version 1.6.1, configurations supported by the M2M architecture 10 of Figure 1 are illustrated in Figure 2. As illustrated, the field domain 12 may include Application Service Nodes (ASNs) 22, Application Dedicated Nodes (ADNs) 24, Middle Nodes (MNs) 26, and Non-oneM2M Device Nodes (NoDNs) 28. As illustrated, each ASN 22 is a node that includes one CSE 18 and at least one AE 16. While multiple ASNs 22 are illustrated in the field domain 12, the field domain 12 may include zero or more ASNs 22. In some embodiments, an ASN 22 resides in a M2M device. An M2M device is any device supporting M2M communication. Some examples of M2M devices are water or hydro meters. However, these are non-limiting examples. The specific types of M2M devices will vary depending on the particular application. Each ADN 24 is a node that includes at least one AE 16 and does not include a CSE 18. While multiple ADNs 24 are illustrated in the field domain 12, the field domain 12 may include zero or more ADNs 24. In some embodiments, an ADN 24 resides in a constrained M2M device (e.g., a M2M device, such as a sensor, having constrained memory, battery, and processing power). Each MN 26 is a node that contains one CSE 18 and zero or more AEs 16. While multiple MNs 26 are illustrated, the field domain 12 may include zero or more MNs 26. In some embodiments, a MN 26 resides in a M2M gateway. In oneM2M, a M2M gateway is a physical equipment that includes, at a minimum, the entities and Application Program Interfaces (APIs) of a MN. Each NoDN 28 is a node that does not contain any AE(s) 16 and does not contain any CSE(s) 18. The NoDNs 28 represent devices attached to the M2M system for interworking purposes, including management.

The infrastructure domain 14 is a domain of a particular M2M service provider. The infrastructure domain 14 includes an IN 30. An IN 30 is a node that contains one CSE 18 and zero or more AEs 16. Currently, in oneM2M, there is exactly one IN 30 per M2M service provider. The CSE 18 in the IN 30 may include CSE function(s) not applicable to other node types.

In the current oneM2M architecture, it is possible to create a subscription for an event at a CSE 18 having a subscription and notification function. This CSE 18 is more specifically referred to herein as a hosting CSE. The subscription identifies, or defines, one or more recipients that are to receive notifications of the event, e.g., in real-time as the instances of the event occur (e.g., notify the recipient(s) when a temperature exceeds a defined threshold). The subscription may be created such that the recipient(s) is(are) entities other than the entity that created the subscription, which is referred to herein as the subscription originator. It is also possible to specify more than one recipient for the subscription.

One problem with the current oneM2M architecture is that the subscription and notification function lacks the flexibility to enable a recipient to indicate that he is no longer interested in the notifications of the event or the flexibility to remove a recipient as a recipient of notifications of the event in a secure way. This is particularly important when the subscription originator is different than the recipient. This is in contrast to most conventional subscription systems (e.g., email subscriptions) where the recipients subscribe to one or more mailing lists themselves and, therefore, can easily unsubscribe themselves from the one or more mailing lists when desired. Conversely, in the current oneM2M architecture when the recipient is not the subscription originator, the recipient cannot unsubscribe without contacting the subscription originator. Specifically, the recipient must contact the subscription originator and ask that the subscription originator remove the recipient from the subscription. In addition, there is no support for the subscription originator to be able to indicate what permissions/actions/policies (simply referred to herein as policies or even more specifically as removal policies) are to be applied when the recipients of notifications of the event want to cease receiving notifications. These policies, if available, would allow the source of the notifications to act on an incoming removal request from a recipient of the notification based on policies the subscription originator provided, e.g., at the creation or update of the event subscription. Finally, there is a need to be able to apply the above in both cases when a group(s) is used to identify a list of recipients (via a group-Identifier (ID)), or when recipients are listed individually (not via a group-ID).

Currently, the only way to allow a recipient to stop receiving notifications of an event is for the subscription originator to modify the exiting subscription to remove that recipient. While this works, it can be quite cumbersome since it requires the subscription originator to be involved every time a recipient desires to be removed and requires the recipient to communicate with the subscription originator, via off-line means, to ask that the subscription originator modify the subscription to remove the recipient. This is not practical for M2M communications where human intervention cannot be assumed at all times and for all applications. Furthermore, it lacks all the dynamic aspects that are required in a flexible environment to cater to different M2M applications that can span consumer related applications to industrial applications.

Another issue with the current oneM2M subscription and notification functionality is that it does not support using groups to define recipients of notifications. In certain cases, the number of recipients is quite large and, therefore, the signaling overhead to change and modify the subscription is quite large and also requires the entity handling the generation of the notifications (subscription and notification function in the hosting CSE for the event) to store a large number of notification recipients.

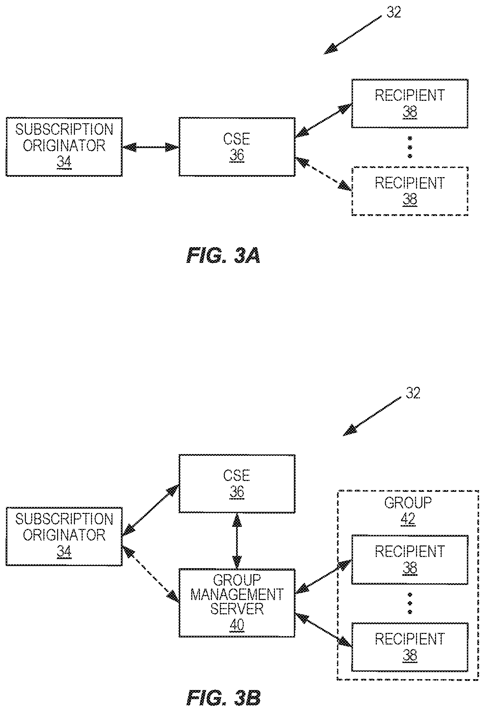

Systems and methods are disclosed herein that resolve these issues. Some embodiments solve both of the issues discussed above while other embodiments solve one or the other of the issues discussed above. In this regard, Figures 3A and 3B illustrate two examples of an M2M system 32 that operates to provide flexible removal of a recipient(s) of notifications of an event according to some embodiments of the present disclosure. More specifically, in the embodiment of Figure 3A, the M2M system 32 includes a subscription originator 34, a CSE 36, and one or more recipients 38. The subscription originator 34 is an entity that is the originator of a subscription created at the CSE 36 to an event. For instance, the subscription originator 34 may be an application entity as an example or another CSE. As used herein, an "event" is an interaction or occurrence related to and detected by the M2M system. For instance, with respect to the CSE 36, an event is an interaction or occurrence related to and detected by the CSE 36. For example, the CSE 36 may monitor an output of a sensor (e.g., a temperature reading from a temperature sensor), and the event may defined as this temperature rising above a defined temperature threshold. Note that this is only one example. The event will vary depending on the particular application. The subscription has one or more recipients 38 of notifications of the event. Further, as discussed below, the subscription includes one or more policies that relate to removal of the recipient(s) 38 as a recipient(s) of notifications of the event (referred to herein as removal policy(ies)) and/or one or more policies that relate to sending notifications of the event to the recipient(s) 38 (referred to herein as notification policy(ies)). In some embodiments, the subscription originator 34 is enabled to update the one or more policies as desired. Notably, phrases such as "the subscription includes one or more policies," "policies for the subscription," "policies associated with the subscription," and similar phrases are used interchangeably herein. All of these phrases mean that the one or more policies, which are submitted by the subscription originator 34, are applied when performing an action(s) (e.g., sending event notifications and/or determining whether to permit removal of a recipient) with respect to the subscription or subscribed to event.

The removal policies enable the source of the notifications of the event, which in this example is the CSE 36, to process removal request(s) from the recipient(s) 38 to determine whether removal of the recipient(s) 38 is permitted. If so, the recipient(s) 38 is removed as a recipient(s) of notifications of the event. In addition, the removal policies give the subscription originator 34 substantial flexibility to control the removal of the recipients 38. For example, via the removal policies, the subscription originator 34 may either require or not require that the source of the notifications, which in this example is the CSE 36, obtain the approval of the subscription originator 34 before removing the recipient(s) 38. In addition or alternatively, the removal polices may be based on one or more other criteria such as, for example, time of day, geographic location of the recipient(s) 38, or the like.

In a similar manner, in some embodiments, one or more notification policies may be used to give the subscription originator 34 flexibility in controlling under what circumstances that the recipient(s) 38 is to receive notifications of the event. The notification policies may be based on any suitable criteria such as, for example, time of day, geographic location of the recipient(s) 38, or the like.

In the embodiment of Figure 3B, the M2M system 32 includes a group management server 40 in addition to the subscription originator 34, the CSE 36, and the one or more recipients 38. In this example, a group 42 is created and identified as the recipient of notifications of the event. The subscription originator 34 again may define policies for the subscription that relate to the removal of the recipients 38 as recipients of notifications of the event and/or policies for the subscription that relate to sending notifications to the recipients 38 in the group 42. The group management server 40 may be a stand-alone server or implemented as a CSF within a CSE (e.g., a CSE of an IN).

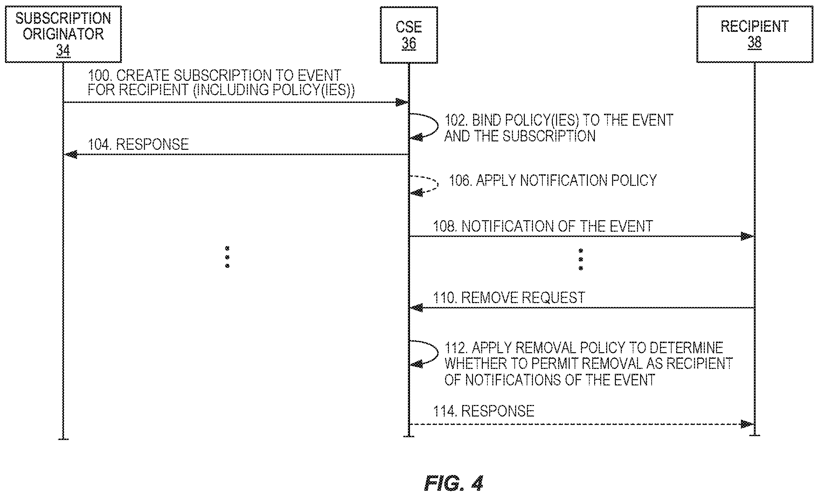

Figure 4 illustrates the operation of the M2M system 32 of Figure 3A according to some embodiments of the present disclosure. As illustrated, the subscription originator 34 communicates with the CSE 36 to create a subscription to an event for the recipient 38 (step 100). Notably, the recipient 38 is an entity that is different than the subscription originator 34. When creating the subscription, the subscription originator 34 also creates, or submits, one or more policies for the subscription. These policies include one or more removal policies that relate to the removal of the recipient 38 as a recipient of notifications of the event and/or one or more notification polices that relate to sending notifications of the event to the recipient 38. If there are multiple recipients 38, the policies may include one or more policies that are applicable to all of the recipients 38 and/or one or more policies that are applicable to the individual recipients 38 (e.g., different policies for different recipients 38). The CSE 36 binds the one or more polices to the event and the subscription (step 102). In some embodiments, the event has a unique event identifier (event-ID) and the subscription has a unique subscription identifier (subscription-ID). Thus, the policies are associated with the event-ID and the subscription-ID. The CSE 36 sends a response to the subscription originator 34 to confirm the creation of the subscription (step 104). While not illustrated, the subscription originator 34 maintains the necessary binding for the subscription.

Thereafter, when the event occurs, the CSE 36 applies the notification policy, if any, to determine whether to send a notification of the event to the recipient 38 (step 106). Note that step 106 is optional (i.e., is not required in all embodiments). The notification policy is generally a policy created by the subscription originator 34 that the CSE 36 applies to determine whether the notification of the event should be sent to the recipient 38. The notification policy may be specific to the particular recipient 38 or may be, for example, generally applicable to all recipients 38 of the notifications of the event for this particular subscription (if there are multiple recipients 38). The notification policy may be based on any suitable criteria such as, for example, time of day and/or geographic location of the recipient 38. For instance, the notification policy may be such that notifications of the event are sent to the recipient 38 only during certain hours of the day and/or only when the recipient 38 is located in a particular geographic area.

Assuming that the notification of the event is to be sent to the recipient 38, the CSE 36 sends the notification of the event to the recipient 38 (step 108). This process may continue in this manner such that notifications continue to be sent to the recipient 38 for multiple occurrences of the event.

In this example, at some point, the recipient 38 desires for the notifications of the event to cease. As such, the recipient 38 sends a remove request to the CSE 36 (step 110). In some embodiments, at least one and potentially all of the notifications sent to the recipient 38 include the event-ID and the subscription-ID, and the remove request includes the event-ID and the subscription-ID. In response to receiving the remove request, the CSE 36 applies the removal policy to determine whether to permit removal of the recipient 38 as a recipient of notifications of the event (step 112). The removal policy may be specific to the recipient 38 or may be generally applicable to all recipients 38 of the event for the subscription.

The removal policy is generally a policy created by the subscription originator 34 that the CSE 36 applies to determine whether to permit removal of the recipient 38 as a recipient of notifications of the event per the subscription. The removal policy may be specific to the particular recipient 38 or may be, for example, generally applicable to all recipients 38 of the notifications of the event for this particular subscription (if there are multiple recipients 38). The removal policy may, for example, indicate whether approval of the subscription originator 34 is required before removal is permitted. In addition or alternatively, the removal policy may be based on any suitable criteria such as, for example, time of day and/or geographic location of the recipient 38. For instance, the removal policy may be such that approval of the subscription originator 38 is always required. As another example, the removal policy may be such that approval of the subscription originator 38 is only required during certain hours of the day and/or only when the recipient 38 is located in a particular geographic area but otherwise is not required.

By applying the removal policy, the CSE 36 determines whether to permit removal of the recipient 38, as discussed above. As a result, the recipient 38 is removed as a recipient of notifications of the event if removal is permitted and, otherwise, is not removed as a recipient of notifications of the event. Optionally, a response is sent to the recipient 38 to either indicate that the removal request has been accepted (and thus the recipient 38 has been removed) or rejected (and thus the recipient 38 has not been removed) (step 114). While not illustrated, it should be noted that, in some embodiments, the subscription originator 34 can optionally be notified of removal of recipients if it subscribes to the CSE 36 for such an event.

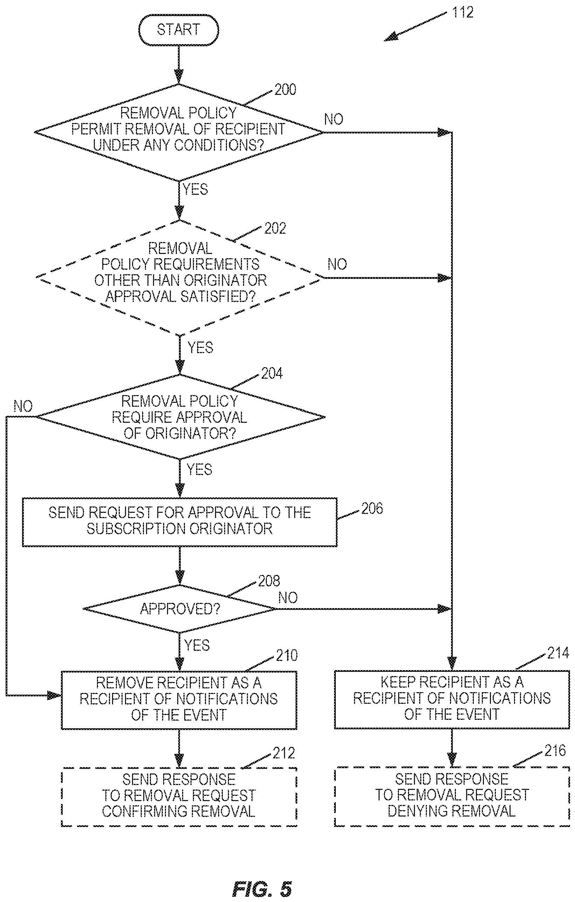

Figure 5 is a flow chart that illustrates step 112 of Figure 4 in more detail according to some embodiments of the present disclosure. For this discussion, the process is performed by the CSE 36. However, it should be noted that this process may be performed more generally by the source of the notifications. As illustrated, in order to apply the removal policy, in some embodiments (i.e., optionally), the CSE 36 determines whether the removal policy does not permit removal of the recipient 38 under any conditions (step 200). If not, the process proceeds to step 214 (discussed below). If the policy does permit removal of the recipient 38 at least under some conditions, the CSE 36 determines whether any removal policy requirements other than subscription originator 34 approval are satisfied (step 202). Any suitable requirements may be used. However, in some particular embodiments, these requirements may be based on criteria such as, for example, time of day and/or geographic location of the recipient 38, as discussed above. If these requirements (if any) are not satisfied, the process proceeds to step 214 (discussed below). Otherwise, the CSE 36 determines whether the removal policy requires approval from the subscription originator 34 (step 204).

If approval of the subscription originator 34 is not required, the process proceeds to step 210 (discussed below). However, if approval of the subscription originator 34 is required, the CSE 36 sends a request to the subscription originator 34 for approval to remove the recipient 38 as a recipient of notifications of the event for the subscription (step 206). This request may include, for example, information that identifies the recipient 38 (e.g., a recipient-ID), information that identifies the event (e.g., an event-ID), and/or information that identifies the subscription (e.g., a subscription-ID). The CSE 36 then determines whether approval is received from the subscription originator 34 in response to the request (step 208). If not, the process proceeds to step 214 (discussed below).

If in step 204 approval was not required or if in step 208 approval is received from the subscription originator 34, the CSE 36 removes the recipient 38 as a recipient of notifications of the event for the subscription (step 210). As a result, the recipient 38 will no longer receive notifications of the event from the CSE 36 for the subscription. Optionally, the CSE 36 sends a response to the recipient 38 to inform the recipient 38 that the recipient 38 has successfully be removed as a recipient of notifications of the event (step 212). While not illustrated, the CSE 36 may also send a message to the subscription originator 34 to inform the subscription originator 34 that the recipient 38 has been removed.

If in step 200 the removal policy was determined to not permit removal of the recipient 38 under any conditions or if in step 202 the removal policy requirements were not satisfied or if in step 208 approval was not received from the subscription originator 34, the CSE 36 keeps the recipient 38 as a recipient of notifications of the event (i.e., the CSE 36 does not remove the recipient 38) (step 214). Optionally, the CSE 36 sends a response to the recipient 38 to inform the recipient 38 that the removal request is denied, or rejected (step 216). While not illustrated, the CSE 36 may also send a message to the subscription originator 34 to inform the subscription originator 34 that the removal request from the recipient 38 has been denied or accepted.

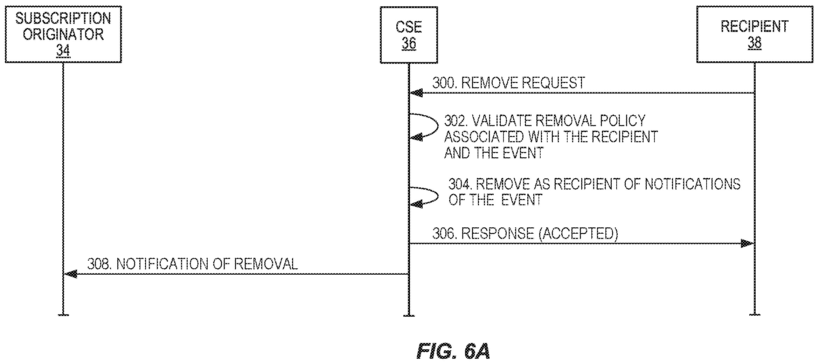

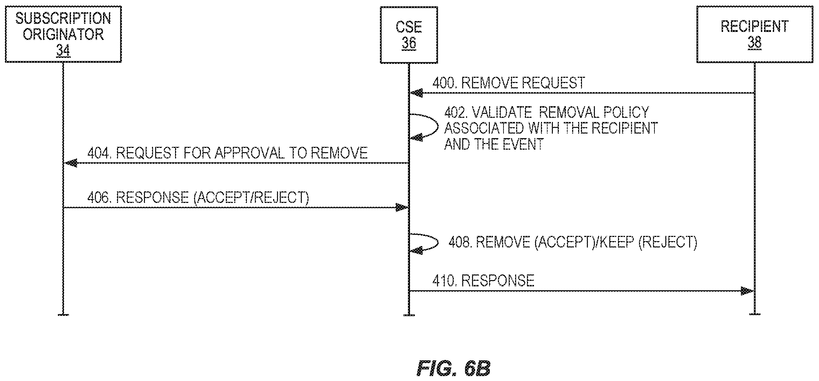

Figures 6A and 6B illustrate the operation of the CSE 36 to process a remove request from the recipient 38 according to the process of Figure 5 according to some embodiments of the present disclosure. In particular, Figure 6A illustrates a scenario where the removal policy does not require approval from the subscription originator 34, whereas Figure 6B illustrates a scenario where the removal policy does require approval from the subscription originator 34. As illustrated in Figure 6A, the CSE 36 receives a removal request from the recipient 38, as described above (step 300). The CSE 36 then applies the removal policy for the recipient 38. Specifically, the CSE 36 validates the removal policy associated with the recipient 38 and the event (step 302). The validation includes, in this example, determining whether approval from the subscription originator 34 is required. In addition, validation may include determining whether one or more additional criteria for removal are satisfied, as discussed above. In this example, the removal policy does not require approval from the subscription originator 34 and all other requirements for removal are satisfied (if any). As such, the CSE 36 removes the recipient 38 as a recipient of notifications of the event (step 304). In addition, in this example, the CSE 36 sends a response to the recipient 38 indicating that the removal request is accepted (step 306) and sends a notification of the removal of the recipient 38 to the subscription originator 34 (step 308). The notification includes, in some embodiments, the ID of the recipient 38, the event-ID, and the subscription-ID.

In contrast, in Figure 6B, the CSE 36 receives a removal request from the recipient 38, as described above (step 400). The CSE 36 then applies the removal policy for the recipient 38. Specifically, the CSE 36 validates the removal policy associated with the recipient 38 and the event (step 402). The validation includes, in this example, determining whether approval from the subscription originator 34 is required. In addition, validation may include determining whether one or more additional criteria for removal are satisfied, as discussed above. In this example, the removal policy does require approval from the subscription originator 34. As such, the CSE 36 sends a request for approval to the subscription originator 34 (step 404). The request for approval is a request for approval from the subscription originator 34 to remove the recipient 38 as a recipient of notifications of the event. The request for approval identifies the recipient 38, the event, and the subscription. The subscription originator 34 responds to the request for approval by either accepting, or granting, the request (i.e., giving approval) or by rejecting the request (i.e., disapproving) (step 406). The CSE 36 then removes the recipient 38 as a recipient of notifications of the event if the subscription originator 34 gave approval or does not remove the recipient 38 as a recipient of notifications of the event if the subscription originator 34 did not give approval (step 408). In this example, the CSE 36 sends a response to the recipient 38 indicating whether the removal request was accepted or rejected (step 410).

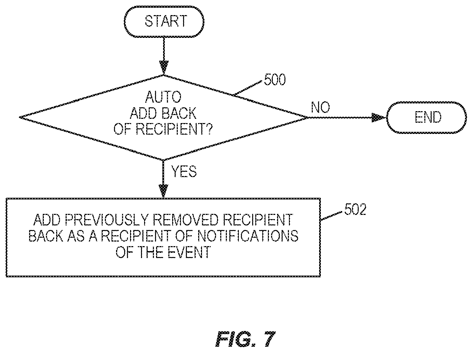

The embodiments of Figures 4 through 6A and 6B relate to the removal of the recipient 38 as a recipient of notifications of the event. Figure 7 is a flow chart that illustrates an automatic add-back feature that is, in some embodiments, used to automatically add a previously removed recipient 38 back as a recipient of notifications of the event according to some embodiments of the present disclosure. More specifically, sometime after the recipient 38 is removed as a recipient of notifications of the event, the CSE 36 determines whether to perform an automatic add-back of the recipient 38 (step 500). This determination may be made by any suitable criteria. The criteria may be specific to the event (e.g., if the event is the temperature being monitored by a meter rising above a first threshold, the automatic add-back criteria may include, for instance, the temperature rising above a second threshold that is greater than the first threshold). In addition or alternatively, the criteria for automatic add-back may be based on criteria such as, for example, time of day or geographic location. The criteria for automatic add-back of the recipient 38 may be included in, for example, the removal policy associated with the recipient 38 and the event. If the CSE 36 determines that the recipient 38 is not to be automatically added back, the process ends. However, if the CSE 36 determines that the recipient 38 is to be automatically added back, the CSE 36 adds the recipient 38 back as a recipient of notifications of the event (step 502). This may be done with or without requesting approval from the subscription originator 34.

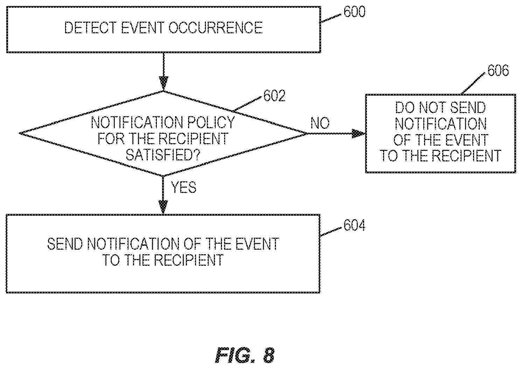

As discussed above, in some embodiments, the CSE 36 may apply a notification policy associated with the recipient 38 and the event to determine whether to send a notification of the event to the recipient 38. In this regard, Figure 8 is a flow chart that illustrates the operation of the CSE 36 to apply a notification policy and, as a result of the notification policy, either send or not send a notification of the event to the recipient 38. As illustrated, in this example, the CSE 36 detects the occurrence of the event (step 600). The CSE 36 determines whether the notification policy associated with the recipient 38 and the event is satisfied (step 602). If so, the CSE 36 sends the notification of the event to the recipient 38 (step 604). Otherwise, the CSE 36 does not send the notification of the event to the recipient 38 (step 606).

While Figures 3A and 4-8 focus on non-group based embodiments, the discussion now turns to group-based embodiments. In particular, these embodiments relate to the M2M system 32 of Figure 3B where the group management server 40 is utilized to create the group 42 of recipients 38. In some embodiments, the subscription originator 34 communicates with the group management server 40 to create the group 42 and then subscribes to an event hosted by the CSE 36 using the group 42 as the recipient for notifications of the subscribed to event. More specifically, in some embodiments, the subscription originator 34 makes use of the group management server 40 to create the group 42 of recipients 38, where the group 42 of recipients 38 includes multiple recipients 38. The group 42 has a group-ID that can be used to reference the recipients 38 in the group 42. The subscription originator 42, as well as other subscription originators, may create multiple groups 42, where each group 42 has its own group-ID.

The subscription function is expanded to allow the definition of a group (e.g., the group 42) as a recipient of the notifications of a subscribed to event. The group-ID of the group 42 points to the group management server 40. The group management server 40 stores the list of recipients 38 in the group 42 in association with the group-ID of the group 42.

Each of the recipients 38 in the group 42 stores the group-ID of the group 42 (e.g., which may be communicated to the recipient 38 in a first notification sent to the recipient 38). The group-ID may be used by the recipient 38 to, e.g., request that the recipient 38 be removed as a recipient of notifications of the event if the recipient 38 so desires. In some embodiments, access control and policies set by the subscription originator 34 associated with that group-ID control who can submit these requests even before acting on any such requests.

At event subscription creation, the subscription originator 34 submits the policies applicable to all of the recipients 38, which may be more generally referred to as members, in the group 42. Notably, not all members in the group 42 may initially be configured as actual recipients 38. For example, the policies submitted by the subscription originator 34 may initially indicate that only a subset of the members in the group 42 are to be actual recipients of the notifications of the subscribed to event. The CSE 36 hosting the event stores the policies and binds them to the event, subscription, and group-ID. In some embodiments, upon initiating the first notification of the event by the CSE 36, the CSE 36 includes the applicable policies to the event and the group-ID. Notably, since the recipient 38 indicated in the subscription is the group-ID, the CSE 36 sends the notification to the group management server 40. The group management server 40 allocates a policy-ID to the received policies, stores the policies, and binds them to the event and the group-ID. The group management server 40 returns the policy-ID to the hosting CSE 36 initiating the notification, which in turn stores the policy-ID and binds it to the event, policies, subscription, and group-ID. The policy-ID enables the CSE 36 hosting the event to update the policies should the subscription originator 34 update the policies later on in an event subscription refresh. The policies are not included in the notifications sent to the recipients 38 of the notifications by the group management server 40. Rather, the policies are just used by the group management server 40.

Any changes to the policies by the subscription originator 34 (through a subscription refresh) for an event shall be pushed to the group management server 40 by the event hosting CSE 36. Any suitable technique can be used to push the policy changes to the group management server 40. For example, a special notification can be defined and used by the CSE 36 for this purpose. As another example, an Extensible Markup Language (XML) (or similar) document can be created and maintained by the group management server 40 to store the policies. This XML document may be referenced by the policy-ID. Then, this XML document can be updated by the CSE 36 hosting the event using Open Mobile Alliance (OMA) XML Document Management (XDM) techniques.

In a manner similar to that discussed above, a recipient 38 in the group 42 may submit a request to be removed as a recipient of notifications of the event. In the group-based embodiments, the removal request is sent to the group management server 40, rather than to the CSE 36. Removal policies may then be applied by the group management server 40 to determine whether to grant or reject the removal request, in a manner similar to that described above with respect to the non-group based embodiments.

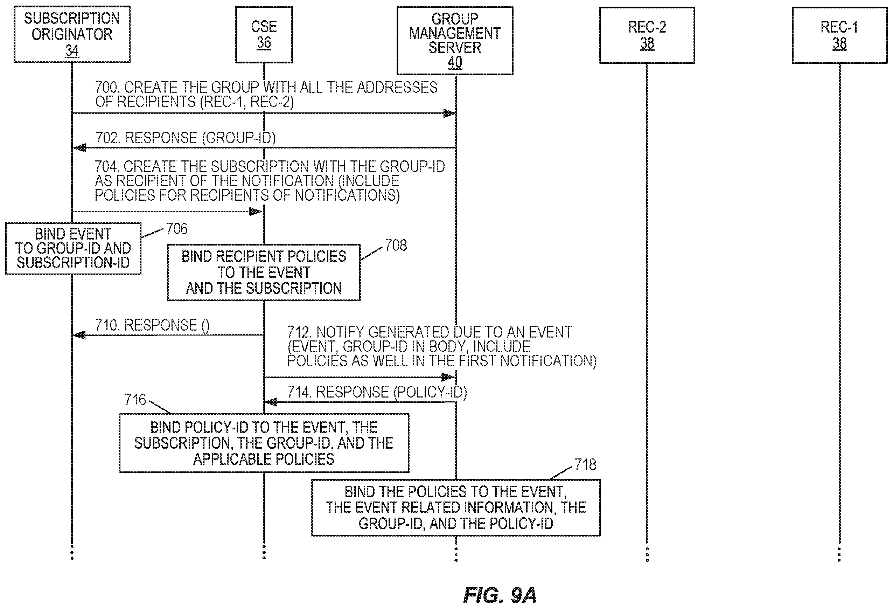

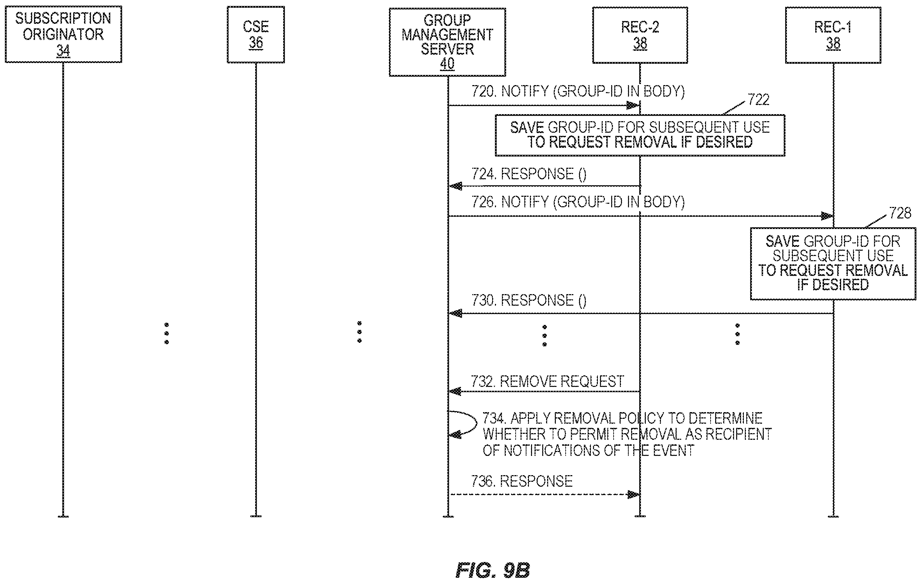

Figures 9A and 9B illustrate the operation of the M2M system 32 of Figure 3B according to some embodiments of the present disclosure. As illustrated, the subscription originator 34 communicates with the group management server 40 to create the group 42 including the recipients 38, which in this example are rec-1 and rec-2 (step 700). At this point, the subscription has not yet been created. As such, the recipients 38 may be referred to as members of the group 42, intended recipients 38, or targets. The group management server 40 creates the group 42 in response to the request and sends a response to the subscription originator 34 including the group-ID of the group 42 (step 702).

The subscription originator 34 then communicates with the CSE 36 to create a subscription to an event hosted by the CSE 36, where the group-ID is provided as the identifier of the recipient 38 for the subscription (step 704). In addition, in some embodiments, when creating the subscription, the subscription originator 34 also submits policies (e.g., removal and/or notification policies) for the group 42. In some embodiments, the policies are polices for the individual recipients 38 in the group 42 (i.e., the policies are applied to the recipients 38 individually). However, in some embodiments, one or more (or even all) of the policies are general polices applicable to all of the recipients 38 in the group 42. The subscription originator 34 binds the event to the group-ID, and the subscription (step 706), and the CSE 36 binds the policies to the event and the subscription (step 708). The CSE 36 may respond to the subscription originator 34 to confirm that the subscription has been created (step 710).

At some point, upon the occurrence of the event, the CSE 36 sends a notification to the group management server 40 for the event (step 712). In some embodiments, for the first notification after creating the subscription, the CSE 36 also provides the policies for the subscription to the group management server 40. The policies may be provided in the notification or separately. The group-ID of the group 42 is included in the notification. For the first notification where the policies are also provided, the group management server 40 assigns a policy-ID to the policies and sends a response to the CSE 36 including the policy-ID (step 714). The CSE 36 binds the policy-ID to the event, the subscription, the group-ID, and the applicable policies (step 716). As discussed above, the policy-ID enables the CSE 36 to update the policies in the event that the subscription originator 34 subsequently changes the policies. The group management server 40 binds the policies to the event, the event related information, the group-ID, and the policy-ID (step 718).

Upon receiving the notification of the event from the CSE 36, the group management server 40 uses the group-ID to identify the recipients 38 in the corresponding group 42. In this example, the recipients 38 in the group 42 are rec-1 and rec-2. Notably, while not illustrated, notification policies may be defined by the subscription originator 34 in some embodiments. If notification policies are defined, the group management server 40 applies the notification policies to determine which of the members/recipients in the group 42 are to receive the notification. In this example, the group management server 40 sends the notification of the event to the recipient 38 (rec-2) in the group 42 (step 720). In some embodiments, the first notification of the event sent to the recipient 38 also includes the group-ID of the group 42. In this case, the recipient 38 (rec-2) stores the group-ID for later use, if desired (step 722). For instance, the recipient 38 (rec-2) may subsequently use the group-ID to request removal as a recipient. The recipient 38 (rec-2) may, in some embodiments, send a response to the group management server 40 to confirm reception of the notification (step 724). In the same manner, the group management server 40 sends the notification of the event to the recipient 38 (rec-1) in the group 42 (step 726). In some embodiments, the first notification of the event sent to the recipient 38 also includes the group-ID of the group 42. In this case, the recipient 38 (rec-1) stores the group-ID for later use, if desired (step 728). The recipient 38 (rec-1) may, in some embodiments, send a response to the group management server 40 to confirm reception of the notification (step 730). Besides identifying the group 42, the group-ID enables the recipient 38 (rec-1) to communicate with the group management server 40 to initiate a request if it desires to be removed as a recipient of notifications of the event. The process may continue in this manner such that additional notifications are sent to the recipients 38 for additional occurrences of the event.

In this example, at some point, one of the recipients 38 (rec-2) in the group 42 desires to be removed as a recipient of notifications of the event. As such, the recipient 38 (rec-2) sends a removal request to the group management server 40 (step 732). The removal request includes the group-ID of the group 42 as well as an identifier of the event (event-ID). Notably, the event-ID may be included in each notification or the first notification for the event. The group management server 40 then applies the removal policy associated with the group-ID and the event to determine whether to remove the recipient 38 (rec-2) as a recipient of notifications of the event (step 734). The details are as described above with respect to the CSE 36 for the non-group based embodiments. For instance, in some examples, the removal policy indicates whether approval from the subscription originator 34 is required for removal of the recipient 38 (rec-2) as a recipient of notifications of the event. In addition or alternatively, other criteria may be considered (e.g., time of day, geographic location of the recipient 38, or the like), according to the removal policy. Importantly, even if removal is permitted, the recipient 38 (rec-2) is removed as a recipient of notifications of the event but is not removed from the group 42. This may be particularly beneficial where, for example, the subscription originator 34 uses the same group 42 for multiple subscriptions. Optionally, the group management server 40 sends a response to the recipient 38 (rec-2) to indicate whether the removal request is accepted or rejected (step 736).

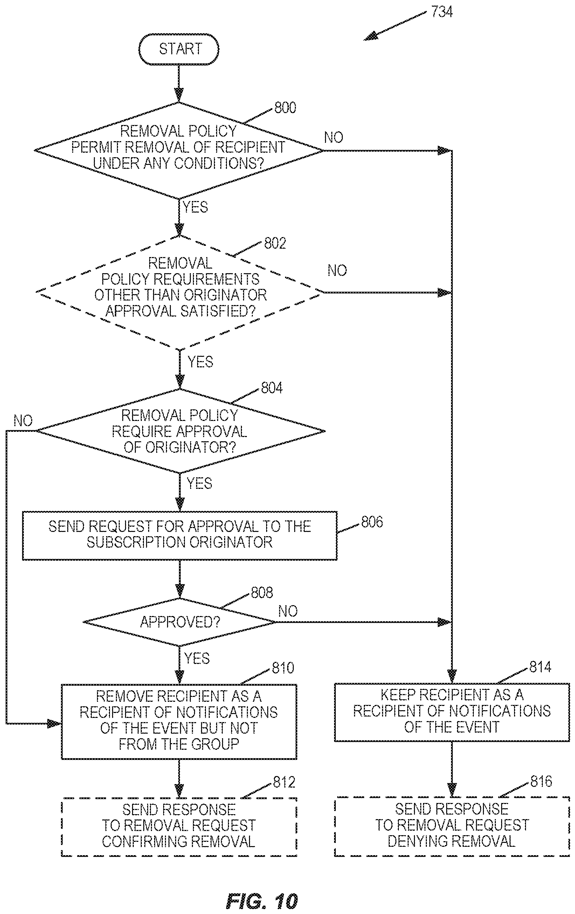

Figure 10 is a flow chart that illustrates step 734 of Figure 9B in more detail according to some embodiments of the present disclosure. For this discussion, the process is performed by the group management server 40. As illustrated, in order to apply the removal policy, in some embodiments (i.e., optionally), the group management server 40 determines whether the removal policy does not permit removal of the recipient 38 under any conditions (step 800). If not, the process proceeds to step 814 (discussed below). If the policy does permit removal of the recipient 38 at least under some conditions, the CSE 36 determines whether any removal policy requirements other than subscription originator 34 approval are satisfied (step 802). Any suitable requirements may be used. However, in some particular embodiments, these requirements may be based on criteria such as, for example, time of day and/or geographic location of the recipient 38, as discussed above. If these requirements (if any) are not satisfied, the process proceeds to step 814 (discussed below). Otherwise, the group management server 40 determines whether the removal policy requires approval from the subscription originator 34 (step 804).

If approval of the subscription originator 34 is not required, the process proceeds to step 810 (discussed below). However, if approval of the subscription originator 34 is required, the group management server 40 sends a request to the subscription originator 34 for approval to remove the recipient 38 as a recipient of notifications of the event for the subscription (step 806). This request may include, for example, information that identifies the recipient 38 (e.g., a recipient-ID), information that identifies the event (e.g., an event-ID), and/or information that identifies the subscription (e.g., a subscription-ID). The group management server 40 then determines whether approval is received from the subscription originator 34 in response to the request (step 808). If not, the process proceeds to step 814 (discussed below).

If in step 804 approval was not required or if in step 808 approval is received from the subscription originator 34, the group management server 40 removes the recipient 38 as a recipient of notifications of the event for the subscription but does not remove the recipient 38 from the group 42 (step 810). As a result, the recipient 38 will no longer receive notifications of the event from the group management server 40 for the subscription, but the recipient 38 remains in the group 42. Again, this may be particularly beneficial if the same group 42 is used for multiple subscriptions. Optionally, the group management server 40 sends a response to the recipient 38 to inform the recipient 38 that the recipient 38 has successfully be removed as a recipient of notifications of the event (step 812). While not illustrated, the group management server 40 may also send a message to the subscription originator 34 to inform the subscription originator 34 that the recipient 38 has been removed.

If in step 800 the removal policy was determined to not permit removal of the recipient 38 under any conditions or if in step 802 the removal policy requirements were not satisfied or if in step 808 approval was not received from the subscription originator 34, the group management server 40 keeps the recipient 38 as a recipient of notifications of the event (i.e., the group management server 40 does not remove the recipient 38) (step 814). Optionally, the group management server 40 sends a response to the recipient 38 to inform the recipient 38 that the removal request is denied, or rejected (step 816). While not illustrated, the group management server 40 may also send a message to the subscription originator 34 to inform the subscription originator 34 that the removal request from the recipient 38 has been denied.

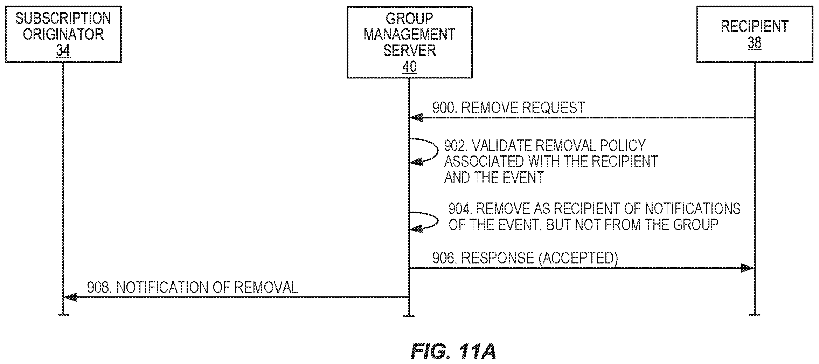

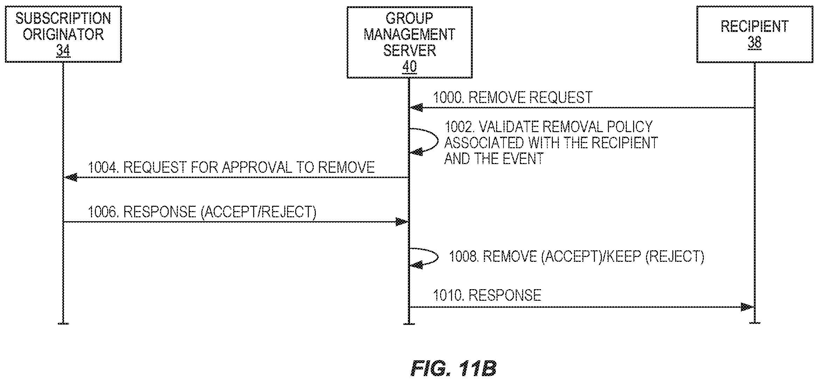

Figures 11A and 11B illustrate the operation of the group management server 40 to process a remove request from the recipient 38 according to the process of Figure 10 according to some embodiments of the present disclosure. The processes of Figures 11A and 11B are the same as that of Figures 6A and 6B, but where the group management server 40 processes the removal request rather than the CSE 36. In particular, Figure 11A illustrates a scenario where the removal policy does not require approval from the subscription originator 34, whereas Figure 11B illustrates a scenario where the removal policy does require approval from the subscription originator 34. As illustrated in Figure 11A, the group management server 40 receives a removal request from the recipient 38, as described above (step 900). The group management server 40 then applies the removal policy for the recipient 38. Specifically, the group management server 40 validates the removal policy associated with the recipient 38 and the event (step 902). The validation includes, in this example, determining whether approval from the subscription originator 34 is required. In addition, validation may include determining whether one or more additional criteria for removal are satisfied, as discussed above. In this example, the removal policy does not require approval from the subscription originator 34 and all other requirements for removal are satisfied (if any). As such, the group management server 40 removes the recipient 38 as a recipient of notifications of the event but not from the group 42 (step 904). In addition, in this example, the group management server 40 sends a response to the recipient 38 indicating that the removal request is accepted (step 906) and sends a notification of the removal of the recipient 38 to the subscription originator 34 (step 908). The notification of the removal identifies the recipient 38, the group 42, the event, and the subscription.

In contrast, in Figure 11B, the group management server 40 receives a removal request from the recipient 38, as described above (step 1000). The group management server 40 then applies the removal policy for the recipient 38. Specifically, the group management server 40 validates the removal policy associated with the recipient 38 and the event (step 1002). The validation includes, in this example, determining whether approval from the subscription originator 34 is required. In addition, validation may include determining whether one or more additional criteria for removal are satisfied, as discussed above. In this example, the removal policy does require approval from the subscription originator 34. As such, the group management server 40 sends a request for approval to the subscription originator 34 (step 1004). The request for approval is a request for approval from the subscription originator 34 to remove the recipient 38 as a recipient of notifications of the event. The request for approval identifies the recipient 38, the group 42, the event, and the subscription. The subscription originator 34 responds to the request for approval by either accepting, or granting, the request (i.e., giving approval) or by rejecting the request (i.e., disapproving) (step 1006). The group management server 40 then removes the recipient 38 as a recipient of notifications of the event but not from the group 42 if the subscription originator 34 gave approval or does not remove the recipient 38 as a recipient of notifications of the event if the subscription originator 34 did not give approval (step 1008). In this example, the group management server 40 sends a response to the recipient 38 indicating whether the removal request was accepted or rejected (step 1010).

The embodiments of Figures 9A and 9B through 11A and 11B relate to, at least in part, the removal of one of the recipients 38 in the group 42 as a recipient of notifications of the event. As discussed above with respect to the non-group based embodiments (Figure 7 in particular), in some embodiments, an automatic add-back feature may be provided to automatically add a previously removed recipient 38 back as a recipient of notifications of the event. In this regard, the group management server 40 may, for instance, perform the process of Figure 7 to determine whether to add-back a previously removed recipient 38 as a recipient of notifications of the event.

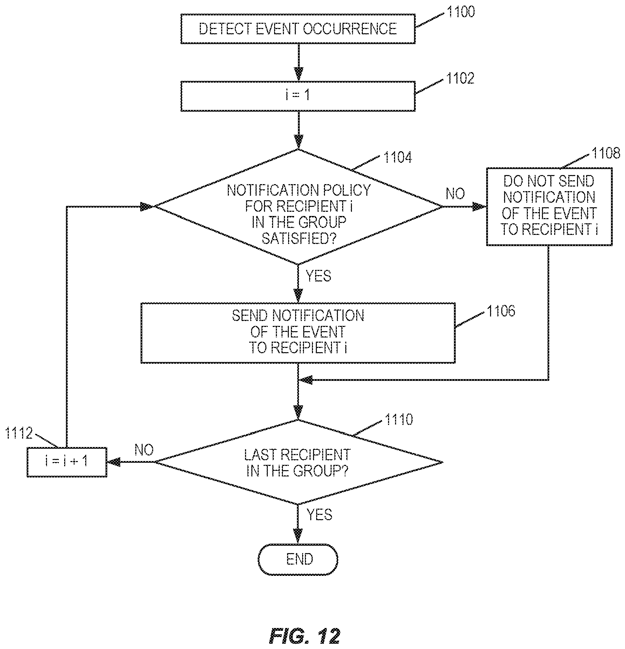

As discussed above, in some embodiments, the group management server 40 may apply a notification policy associated with the group 42 and the event to determine whether to send a notification of the event to the particular recipients 38 in the group 42. In this regard, Figure 12 is a flow chart that illustrates the operation of the group management server 40 to apply a notification policy and, as a result of the notification policy, either send or not send a notification of the event to the recipients 38 in the group 42 according to some embodiments of the present disclosure. As illustrated, in this example, the group management server 40 detects the occurrence of the event (step 1100). The group management server 40 sets an index (i) to 1 (step 1102) and then determines whether the notification policy is satisfied for recipient i in the group 42 (step 1104). If the notification policy is satisfied, the group management server 40 sends the notification of the event to recipient i (step 1106). Otherwise, the group management server 40 does not send the notification of the event to recipient i (step 1108). The group management server 40 determines whether the last recipient 38 in the group 42 has been processed (step 1110). If so, the process ends. If not, the counter i is incremented (step 1112), and the process returns to step 1104 and is repeated. In this manner, the group management server 40 selectively sends the notification of the event to the recipients 38 in the group 42 according to the notification policy(ies) associated with the recipients 38 in the group 42 and the event.

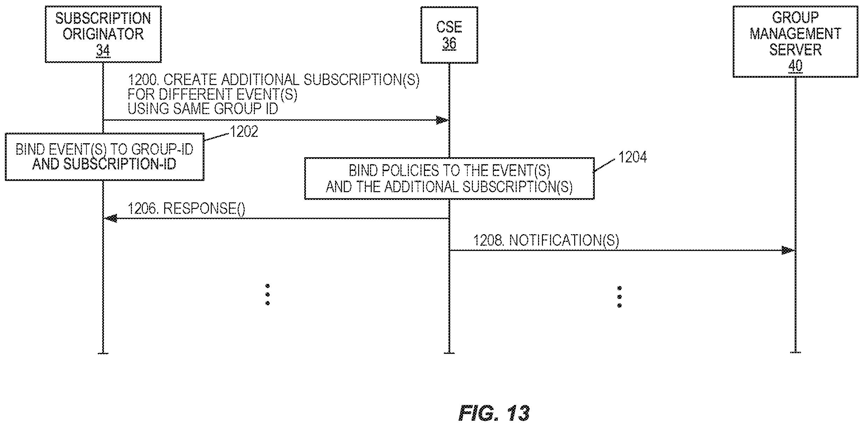

As discussed above, in some embodiments, the subscription originator 34 can create multiple subscriptions to events hosted by the same CSE 36 (or different CSEs) using the same group 42 (i.e., the same group-ID). In this regard, Figure 13 illustrates the operation of the M2M system 32 of Figure 3B to enable additional subscriptions (i.e., in addition to, e.g., the subscription of Figures 9A and 9B) using the same group-ID according to some embodiments of the present disclosure. Notably, in this example, the additional subscription(s) is(are) for an event(s) hosted by the same CSE 36, but the additional subscription(s) may be for an event(s) hosted by another CSE(s).

As illustrated, the subscription originator 34 communicates with the CSE 36 to create an additional subscription(s) to an event(s) hosted by the CSE 36, where the group-ID is provided as the identifier of the recipient(s) 38 for the additional subscription(s) (step 1200). In addition, in some embodiments, when creating the subscription(s), the subscription originator 34 also submits policies (e.g., removal and/or notification policies) for the group 42. Again, the policies are, at least in some embodiments, separate polices for the individual recipients 38 in the group 42. The subscription originator 34 binds the event(s) to the group-ID and subscription (step 1202), and the CSE 36 binds the policies to the respective event(s) and additional subscription(s) (step 1204). The CSE 36 may respond to the subscription originator 34 to confirm that the subscription(s) has(have) been created (step 1206).

At some point, upon the occurrence of the event(s), the CSE 36 sends a notification(s) to the group management server 40 for the event(s) (step 1208). From this point, the process proceeds as described above such that notifications of the events are sent to the recipients 38 in the group 42. In addition, as discussed above, the recipients 38 can, if desired, request removal for a specific event and such requests are processed by the group management server 40 according to the respective notification policy.

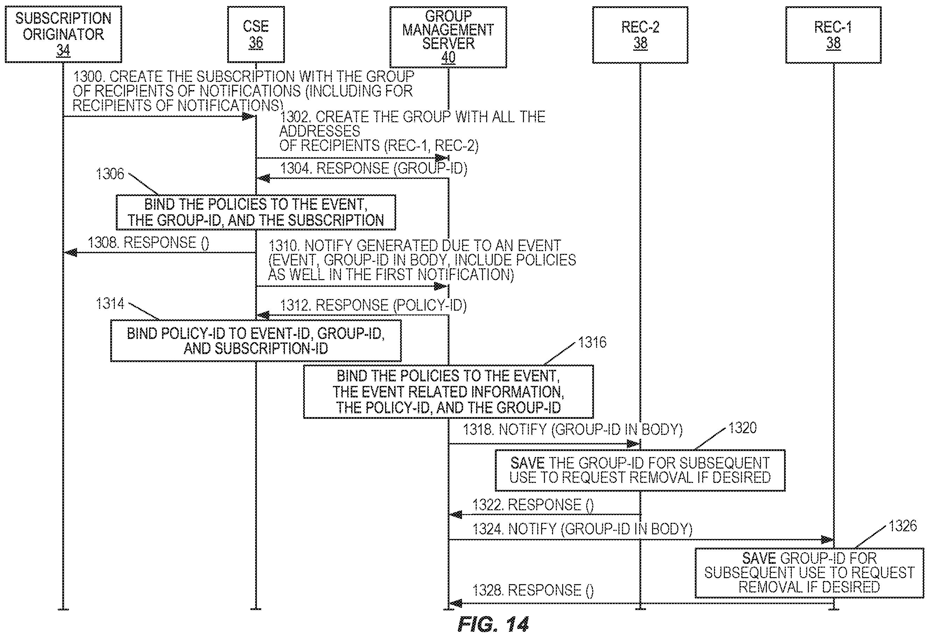

Figure 14 illustrates the operation of the M2M system 32 of Figure 3B according to some other embodiments of the present disclosure. In particular, in the embodiment of Figures 9A and 9B, the subscription originator 34 communicates with the group management server 40 to create the group 42. However, in the embodiment of Figure 14, the CSE 36 communicates with the group management server 40 to create the group 42. Otherwise, the operation is the same as that described above with respect to Figures 9A and 9B.

As illustrated, the subscription originator 34 communicates with the CSE 36 to create a subscription to an event for the group 42 of recipients 38 (step 1300). At this point, the group 42 has not yet been created with the group management server 40. As such, the subscription originator 34 submits a list of recipients 38 for the subscription. As discussed above, the subscription originator 34 may also submit policies (e.g., notification and/or removal policies) for the recipients 38. The CSE 36 communicates with the group management server 40 to create the group 42 (step 1302). In response, the group management server 40 returns a group-ID to the CSE 36 for the group 42 (step 1304).

From this point, the process proceeds as described above with respect to steps 708-730 of Figures 9A and 9B. Specifically, the CSE 36 binds the policies to the event, the group-ID, and the subscription (step 1306). The CSE 36 responds to the subscription originator 34 to confirm that the subscription has been created (step 1308). While not illustrated, the subscription originator 34 maintains the necessary binding information for the created subscription. At some point, upon the occurrence of the event, the CSE 36 sends a notification to the group management server 40 for the event (step 1310). In some embodiments, for the first notification after creating the subscription, the CSE 36 also provides the policies for the subscription to the group management server 40. The policies may be provided in the notification or separately. The group-ID of the group 42 is included in the notification. For the first notification where the policies are also provided, the group management server 40 assigns a policy-ID to the policies and sends a response to the CSE 36 including the policy-ID (step 1312). The CSE 36 binds the policy-ID to the event, to the subscription and the group-ID (step 1314). As discussed above, the policy-ID enables the CSE 36 to update the policies in the event that the subscription originator 34 subsequently changes the policies. The group management server 40 binds the policies to the event, the event related information, the policy-ID, and the group-ID (step 1316).

Upon receiving the notification of the event from the CSE 36, the group management server 40 uses the group-ID to identify the recipients 38 in the corresponding group 42. In this example, the recipients 38 in the group 42 are rec-1 and rec-2. Notably, while not illustrated, notification polices may be defined by the subscription originator 34 in some embodiments. If notification policies are defined, the group management server 40 applies the notification policies to determine which of the members/recipients in the group 42 are to receive the notification. In this example, the group management server 40 sends the notification of the event to the recipient 38 (rec-2) in the group 42 (step 1318). In some embodiments, the first notification of the event sent to the recipient 38 also includes the group-ID of the group 42. In this case, the recipient 38 (rec-2) stores the group-ID for later use, if desired (step 1320). The recipient 38 (rec-2) may, in some embodiments, send a response to the group management server 40 to confirm reception of the notification (step 1322). In the same manner, the group management server 40 sends the notification of the event to the recipient 38 (rec-1) in the group 42 (step 1324). In some embodiments, the first notification of the event sent to the recipient 38 also includes the group-ID of the group 42. In this case, the recipient 38 (rec-1) stores the group-ID for later use, if desired (step 1326). The recipient 38 (rec-1) may, in some embodiments, send a response to the group management server 40 to confirm reception of the notification (step 1328). The process may continue in this manner such that additional notifications are sent to the recipients 38 for additional occurrences of the event.

While not illustrated, as discussed above, at some point, one of the recipients 38 in the group 42 may desire to be removed as a recipient of notifications of the event. When this occurs, the recipient 38 sends a removal request to the group management server 40. The removal request is processed by the group management server 40 and, as a result, the recipient 38 is either removed or not removed as a recipient of notifications of the event, but remains in the group 42.

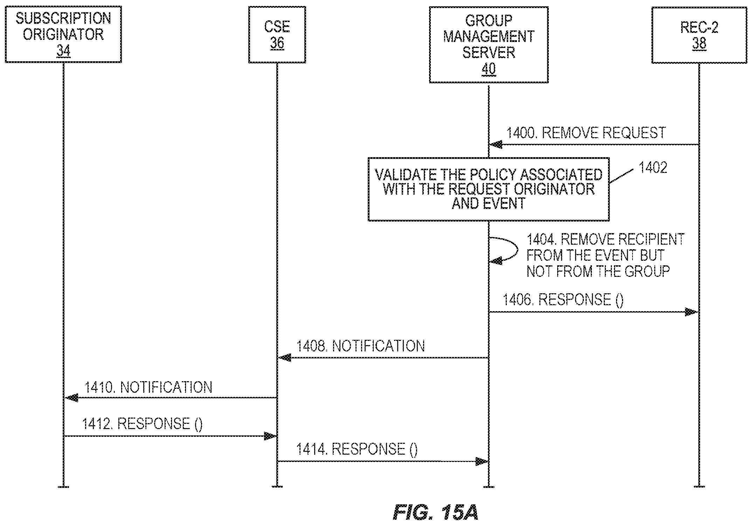

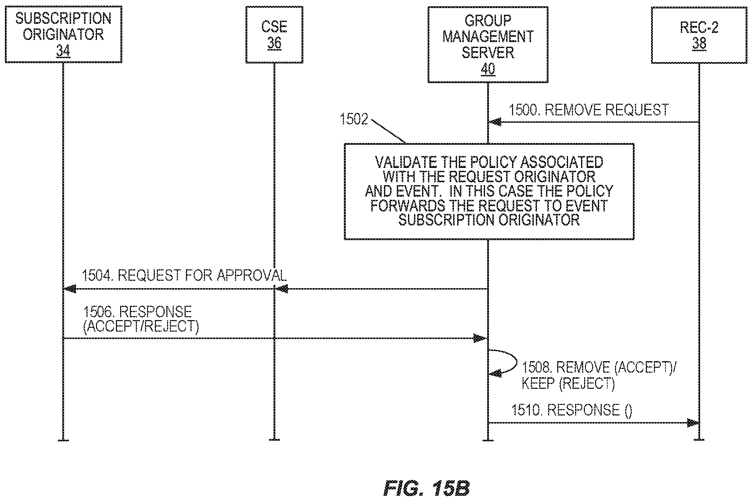

Two examples of the removal process are illustrated in Figures 15A and 15B. In particular, Figure 15A illustrates a scenario where the removal policy does not require approval from the subscription originator 34, whereas Figure 15B illustrates a scenario where the removal policy does require approval from the subscription originator 34. As illustrated in Figure 15A, the group management server 40 receives a removal request from the recipient 38, as described above (step 1400). The removal request is in general a request to remove the recipient 38 as a recipient of notifications of the event. In some embodiments, the removal request includes the group-ID, an event-ID of the event, the subscription identifier, and an identifier of the recipient 38. The group management server 40 then applies the removal policy for the recipient 38. Specifically, the group management server 40 validates the removal policy associated with the recipient 38 and the event (step 1402). The validation includes, in this example, determining whether approval from the subscription originator 34 is required. In addition, validation may include determining whether one or more additional criteria for removal are satisfied, as discussed above.

In this example, the removal policy does not require approval from the subscription originator 34 and all other requirements for removal are satisfied (if any). As such, the group management server 40 removes the recipient 38 as a recipient of notifications of the event but not from the group 42 (step 1404). In response, the group management server 40 sends a response to the recipient 38 indicating that the recipient 38 has been removed as a recipient of notifications of the event (step 1406). In addition, in this example, the group management server 40 sends a notification to the CSE 36 that the recipient 38 has been removed as a recipient of notifications of the event (step 1408). In addition to identifying the removed recipient and the event, the notification also identifies the subscription (e.g., includes the subscription-ID) and the group 42 (group-ID). The CSE 36 then sends a notification to the subscription originator 34 that the recipient 38 has been removed as a recipient of notifications of the event (step 1410). In addition to identifying the removed recipient and the event, the notification also identifies the subscription (e.g., includes the subscription-ID) and the group 42 (group-ID). In this example, the subscription originator 34 sends a response to the CSE 36 to, e.g., confirm receipt of the notification (step 1412), and the CSE 36 sends a response to the group management server 40 to, e.g., confirm receipt of the notification (step 1414).

In contrast, in Figure 15B, the group management server 40 receives a removal request from the recipient 38, as described above (step 1500). The group management server 40 then applies the removal policy for the recipient 38. Specifically, the group management server 40 validates the removal policy associated with the recipient 38 and the event (step 1502). The validation includes, in this example, determining whether approval from the subscription originator 34 is required. In addition, validation may include determining whether one or more additional criteria for removal are satisfied, as discussed above.

In this example, the removal policy does require approval from the subscription originator 34. As such, the group management server 40 sends a request for approval to the subscription originator 34, e.g., via the CSE 36 (step 1504). The request for approval is a request for approval from the subscription originator 34 to remove the recipient 38 as a recipient of notifications of the event. The request for approval identifies the recipient 38, the group 42, the event, and the subscription. The subscription originator 34 responds to the request for approval by either accepting, or granting, the request (i.e., giving approval) or by rejecting the request (i.e., disapproving) (step 1506). The group management server 40 then removes the recipient 38 as a recipient of notifications of the event but not from the group 42 if the subscription originator 34 gave approval or does not remove the recipient 38 as a recipient of notifications of the event if the subscription originator 34 did not give approval (step 1508). In this example, the group management server 40 sends a response to the recipient 38 indicating whether the removal request was accepted or rejected (step 1510).

In the embodiments described above with respect to Figures 3A and 3B through Figures 15A and 15B, polices are sometimes used to control notifications and/or removal of recipients. Notably, policies may be independently configured by subscription originators 34 for each subscription/event and/or for each recipient 38. In other embodiments, policies may be reused across recipients 38 and/or across event subscriptions.

As indicated above, provisioned policies by the subscription originator 34 regarding a specific event for an individual recipient 38 or for the group 42 provides full control for the actions undertaken by the CSE 36 (non-group embodiments) or the group management server 40 (group-based embodiments) with respect to sending notifications of the event and/or processing removal requests from the recipients 38. For instance, these policies can control whether a target should receive a notification of the event at all and/or how removal requests initiated from the recipients 38 of the notifications of the event are handled. So, the policies are very flexible to accomplish different goals. Notably, in some embodiments, if the subscription originator 34 does not submit policies for any or all recipients 38, predefined default policies may be applied.

The policies provided by subscription originator 34 can include, for example, a geographical location to which a policy applies for targets within that location (so for example a policy for a recipient 38 can say that a request for removal from a recipient 38 is accepted if the recipient 38 is located in one geographic area but rejected if the recipient 38 is located in another geographic area). The geographic locations of the recipients 38 can be obtained using any suitable technique. As another example, policies may use time of day as an input as well, where a policy can apply to a specific target during a specific time of the day and another policy applies for another time of day. Importantly, geographic location and time of day are only examples. Other inputs/criteria may be additionally or alternatively used as needed or desired. So, the policies provided per target can be conditional and more than one policy can apply depending on the specific condition. Hence, there is complete flexibility.

Another feature that is described with respect to the group-based embodiments is that the same group 42 can be used for multiple subscriptions. Further, through the policies, different subsets of the group 42 can receive the notifications for the different events. For instance, a policy for the group 42 for a first event that is subscribed to for the group 42 may be defined such that a first subset of the group 42 are to receive the notifications for the first event, and a policy for the group 42 for a second event that is subscribed to for the group 42 may be defined such that a second subset (that is different than the first subset) of the group 42 is to receive the notifications for the second event. One advantage to using policies to control which members of the group 42 receive notifications for a particular event is that the same group 42 can be used in different contexts (events) even though some members of the group 42 are not pertinent to some event(s). Instead of creating a new group, the same group 42 can be reused to the new event subscription, but the provisioned policies for the new event subscription can include, for example, a policy for notifications of that event to not be sent to certain members of the group 42 (or conversely a policy for notifications of that event to only be sent to certain members of the group 42). This allows reuse of the same group 42 without needing to create a new group, hence gaining optimization.

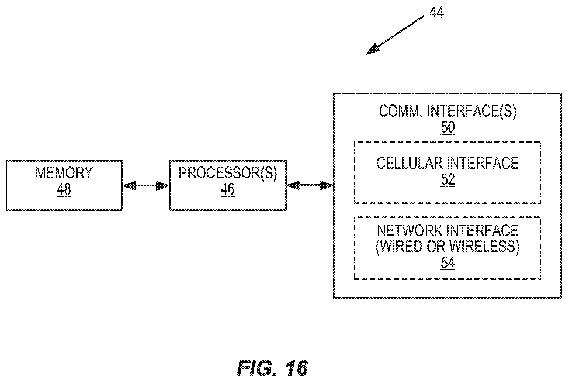

Figure 16 is a block diagram of a node 44 according to some embodiments of the present disclosure. The node 44 may be or may implement the subscription originator 34, the CSE 36, the recipient 38, or the group management server 40 according to some embodiments of the present disclosure. The node 44 includes one or more processors 46, or processor circuits, (e.g., one or more Central Processing Units (CPUs), Application Specific Integrated Circuits (ASICs), or Field Programmable Gate Arrays (FPGAs)), memory 48, and one or more communication interfaces 50. The communication interface(s) 50 may include a cellular interface 52 (e.g., an interface or radio enabling communication with a radio access network of a cellular communications system) and/or a network interface 54 (e.g., a wired or wireless interface such as, for example, a fiber optic interface, an Ethernet interface, or a WiFi interface). In some embodiments, the functionality of the subscription originator 34, the CSE 36, the recipient 38, or the group management server 40 is implemented in software that is stored in the memory 48 and executed by the processor(s) 46.

In some embodiments, a computer program including instructions which, when executed by at least one processor, causes the at least one processor to carry out the functionality of the node 44 according to any one of the embodiments described herein is provided. In one embodiment, a carrier containing the aforementioned computer program product is provided. The carrier is one of an electronic signal, an optical signal, a radio signal, or a computer readable storage medium (e.g., a non-transitory computer readable medium such as the memory 48).

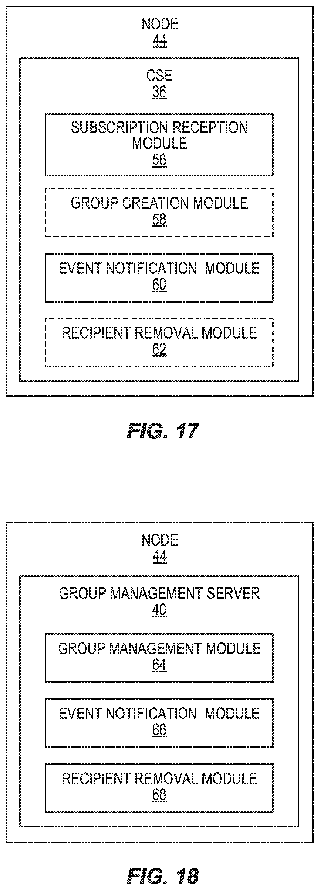

Figure 17 illustrates the node 44 according to some other embodiments of the present disclosure. Here, the node 44 implements the CSE 36. In this example, the CSE 36 is implemented in software and includes a subscription reception module 56, optionally (i.e., in some embodiments) a group creation module 58, an event notification module 60, and optionally (i.e., in some embodiments) a recipient removal module 62. The subscription reception module 56 operates to enable subscription originators, such as the subscription originator 34, to create subscriptions to events hosted by the CSE 36, as described above. In some group-based embodiments, the group creation module 58 operates to communicate with the group management server 40 to create the group 42 of recipients 38 for a subscription to an event hosted by the CSE 36, as described above. The event notification module 60 operates to send notifications of events to the appropriate recipients. Notably, in the group-based embodiments, the recipient from the perspective of the CSE 36 is the group 42, in which case the notification is sent to the group management server 40 rather than the individual recipients 38, as described above. Optionally (i.e., in some embodiments), the CSE 36 also includes the recipient removal module 62 that operates to process removal requests received from recipients 38, as described above.

Figure 18 illustrates the node 44 according to some other embodiments of the present disclosure. Here, the node 44 implements the group management server 40. In this example, the group management server 40 is implemented in software and includes a group management module 64, an event notification module 66, and a recipient removal module 68. The group management module 64 operates to provide functionality related to the creation of groups (e.g., create the group 42 including assigning a group-ID to the group 42 in response to a request to create the group 42). The event notification module 66 operates to send notifications to the recipients 38 in the group 42, as described above. The recipient removal module 68 operates to process removal requests received from recipients 38, as described above.

The following acronyms are used throughout this disclosure.

| | |
|---|---|
| • AE | Application Entity |
| • AND | Application Dedicated Node |
| • API | Application Program Interface |
| • ASIC | Application Specific Integrated Circuit |
| • ASN | Application Service Node |
| • CPU | Central Processing Unit |
| • CSE | Common Services Entity |
| • CSF | Common Services Functions |
| • FPGA | Field Programmable Gate Array |
| • ID | Identifier |
| • IN | Infrastructure Node |
| • IoT | Internet of Things |
| • M2M | Machine-to-Machine |
| • MN | Middle Node |
| • NoDN | Non-oneM2M Device Node |
| • NSE | Network Services Entity |
| • OMA | Open Mobile Alliance |
| • TS | Technical Specification |
| • XDM | Extensible Markup Language Document Management |
| • XML | Extensible Markup Language |

Those skilled in the art will recognize improvements and modifications to the embodiments of the present disclosure. All such improvements and modifications are considered within the scope of the concepts disclosed herein and the claims that follow. The invention is defined by the subject-matter of the independent claims. Further details are defined in the dependent claims.

## Claims

1. A method of operation of a Common Services Entity, CSE, node (34, 36) in a Machine-to-Machine, M2M, communications system (32) to enable removal of a notification recipient (38), comprising:
sending a notification of an event to one or more recipients (38), the one or more recipients (38) being subscribed to notifications of the event by a subscription originator (34) and being different than the subscription originator (34);
receiving a removal request from a recipient (38) of the one or more recipients (38), the removal request being a request to remove the recipient (38) as a recipient of notifications of the event;
determining whether removal of the recipient (38) as a recipient of notifications of the event is permitted based on a removal policy for the recipient (38);
determining whether the removal policy requires approval from the subscription originator (34), wherein the removal policy indicates that approval of the subscription originator (34) is required before removal of the recipient (38) is permitted, and determining whether removal of the recipient (38) as a recipient of notifications of the event is permitted comprises requesting approval to remove the recipient (38) as a recipient of notifications of the event from the subscription originator (34), and determining that removal of the recipient (38) as a recipient of notifications of the event is permitted upon receiving approval from the subscription originator (34); and
removing the recipient (38) as a recipient of notifications of the event upon determining that removal of the recipient (38) as a recipient of notifications of the event is permitted.

2. The method of claim 1 further comprising denying removal of the recipient (38) as a recipient of notifications of the event upon determining that removal of the recipient (38) as a recipient of notifications of the event is not permitted.

3. The method of claim 1 wherein the removal policy indicates whether approval of the subscription originator (34) is required before removal of the recipient (38) is permitted.

4. The method of claim 1 wherein the removal policy indicates that approval of the subscription originator (34) is not required before removal of the recipient (38) is permitted, and determining whether removal of the recipient (38) as a recipient of notifications of the event is permitted comprises determining whether removal of the recipient (38) as a recipient of notifications of the event is permitted without input from the subscription originator (34).

5. The method of claim 1 wherein the removal policy comprises one or more defined criteria that must be satisfied before removal of the recipient (38) as a recipient of notifications of the event is permitted.

6. The method of claim 5 wherein the one or more defined criteria comprise at least one of a group consisting of: a time of day at which the event occurs and a geographic location of the recipient (38).

7. The method of claim 1 wherein the removal policy of the recipient (38) further comprises one or more criteria for automatically adding the recipient (38) back as a recipient of notifications of the event, and the method further comprises:
after removing the recipient (38) as a recipient of notifications of the event, adding the recipient (38) back as a recipient of notifications of the event upon determining that the one or more criteria for automatically adding the recipient (38) back as a recipient of notifications of the event are satisfied.

8. The method of claim 1 wherein the one or more recipients (38) comprise a plurality of recipients (38), and a separate removal policy is defined for each of at least two of the plurality of recipients (38).

9. The method of claim 1 wherein the one or more recipients (38) comprise a plurality of recipients (38), and the removal policy is a common removal policy defined for all, or a subset, of the plurality of recipients (38).

10. The method of claim 1 further comprising:
prior to sending the notification to the recipient (38), determining whether the notification is to be sent to the recipient (38) based on a notification policy of the recipient (38); and
sending the notification to the recipient (38) comprises sending the notification to the recipient (38) upon determining that the notification is to be sent to the recipient (38) based on the notification policy of the recipient (38).

11. The method of claim 10 wherein the notification policy of the recipient (38) is based on one or more defined criteria.

12. The method of claim 11 wherein the one or more defined criteria comprise at least one of a group consisting of: time of day and geographic location of the recipient (38).

13. The method of any of claims 1-12 further comprising, prior to sending the notification of the event to the one or more recipients (38):
receiving a subscription to notifications of the event from the subscription originator (34), wherein the subscription is a subscription to notifications of the event for the one or more recipients (38) and the removal policy for the recipient (38) is associated with the subscription.

14. The method of any of claims 1-12, further comprising:
receiving a request to create a group (42) comprising the one or more recipients (38);
responding to the request to create the group (42) with a group identifier for the group (42); and
receiving a notification of the event with the group identifier as an identifier of a recipient (38) for the notification;
wherein sending the notification of the event to the one or more recipients (38) comprises sending the notification of the event to the one or more recipients (38) in the group (42) in response to receiving the notification of the event with the group identifier as the identifier of the recipient (38) for the notification.

15. The method of claim 14 wherein the notification of the event sent to the one or more recipients (38) in the group (42) comprises the group identifier.

16. The method of claim 14 or 15 wherein removing the recipient (38) as a recipient of notifications of the event comprises removing the recipient (38) as a recipient of notifications of the event but not from the group (42).

17. The method of any of claims 14-16 wherein the one or more recipients (38) is a subset of a plurality of recipients (38) in the group (42), and further comprising:
receiving a notification of a different event with the group identifier being an identifier of a recipient (38) of the notification of the different event and one or more policies for the notification of the different event; and
sending the notification of the different event to a subset of the plurality of recipients (38) in the group (42) according to the one or more policies for the notification of the different event.

18. The method of claim 17 further comprising receiving one or more notification policies for the recipients (38) in the group (42) for notifications of the different event, wherein the one or more notification policies for the recipients (38) in the group (42) for notifications of the different event identify at least one of the plurality of recipients (38) in the group (42) that is not to receive notifications of the different event.

19. A Common Services Entity, CSE, node (44) in a Machine-to-Machine, M2M, communications system (32) that enables removal of a notification recipient (38), comprising:
means for sending a notification of an event to one or more recipients (38), the one or more recipients (38) being subscribed to notifications of the event by a subscription originator (34) and being different than the subscription originator (34);
means for receiving a removal request from a recipient (38) of the one or more recipients (38), the removal request being a request to remove the recipient (38) as a recipient of notifications of the event;
means for determining whether removal of the recipient (38) as a recipient of notifications of the event is permitted based on a removal policy for the recipient (38);
means for determining whether the removal policy requires approval from the subscription originator (34), wherein the removal policy indicates that approval of the subscription originator (34) is required before removal of the recipient (38) is permitted, and determining whether removal of the recipient (38) as a recipient of notifications of the event is permitted comprises requesting approval to remove the recipient (38) as a recipient of notifications of the event from the subscription originator (34), and determining that removal of the recipient (38) as a recipient of notifications of the event is permitted upon receiving approval from the subscription originator (34); and
means for removing the recipient (38) as a recipient of notifications of the event upon determining that removal of the recipient (38) as a recipient of notifications of the event is permitted.

20. A computer program comprising instructions which, when executed on at least one processor, cause the at least one processor to carry out the method according to any one of claims 1-18.

21. A carrier containing the computer program of claim 20, wherein the carrier is one of an electronic signal, an optical signal, a radio signal, or a computer readable storage medium.

## Patentansprüche

1. Betriebsverfahren für einen Common Services Entity-,CSE-,Knoten (34, 36) in einem Maschine-zu-Maschine-,M2M-,Kommunikationssystem (32) zum Ermöglichen einer Entfernung eines Meldungsempfängers (38), umfassend:
Senden einer Meldung eines Ereignisses an einen oder mehrere Empfänger (38), wobei der eine oder die mehreren Empfänger (38) Meldungen des Ereignisses durch einen Abonnement-Ersteller (34) abonniert haben und vom Abonnement-Ersteller (34) verschieden sind;
Empfangen einer Entfernungsanforderung von einem Empfänger (38) des einen oder der mehreren Empfänger (38), wobei die Entfernungsanforderung eine Anforderung zum Entfernen des Empfängers (38) als Empfänger von Meldungen des Ereignisses ist;
Bestimmen, ob Entfernung des Empfängers (38) als Empfänger von Meldungen des Ereignisses erlaubt ist, basierend auf einer Entfernungsrichtlinie für den Empfänger (38);
Bestimmen, ob die Entfernungsrichtlinie eine Genehmigung vom Abonnement-Ersteller (34) erfordert, wobei die Entfernungsrichtlinie anzeigt, dass eine Genehmigung des Abonnement-Erstellers (34) erforderlich ist, bevor Entfernung des Empfängers (38) erlaubt wird, wobei das Bestimmen, ob Entfernung des Empfängers (38) als Empfänger von Meldungen des Ereignisses erlaubt ist, ein Anfordern einer Genehmigung zum Entfernen des Empfängers (38) als Empfänger von Meldungen des Ereignisses vom Abonnement-Ersteller (34) und Bestimmen, dass Entfernung des Empfängers (38) als Empfänger von Meldungen des Ereignisses erlaubt ist, bei Empfang einer Genehmigung vom Abonnement-Ersteller (34) umfasst; und
Entfernen des Empfängers (38) als Empfänger von Meldungen des Ereignisses bei Bestimmen, dass Entfernung des Empfängers (38) als Empfänger von Meldungen des Ereignisses erlaubt ist.

2. Verfahren nach Anspruch 1, ferner umfassend ein Ablehnen von Entfernung des Empfängers (38) als Empfänger von Meldungen des Ereignisses bei Bestimmen, dass Entfernung des Empfängers (38) als Empfänger von Meldungen des Ereignisses nicht erlaubt ist.

3. Verfahren nach Anspruch 1, wobei die Entfernungsrichtlinie anzeigt, ob eine Genehmigung des Abonnement-Erstellers (34) erforderlich ist, bevor Entfernung des Empfängers (38) erlaubt wird.

4. Verfahren nach Anspruch 1, wobei die Entfernungsrichtlinie anzeigt, dass keine Genehmigung des Abonnement-Erstellers (34) erforderlich ist, bevor Entfernung des Empfängers (38) erlaubt wird, wobei das Bestimmen, ob Entfernung des Empfängers (38) als Empfänger von Meldungen des Ereignisses erlaubt ist, ein Bestimmen umfasst, ob Entfernung des Empfängers (38) als Empfänger von Meldungen des Ereignisses ohne Eingabe vom Abonnement-Ersteller (34) erlaubt ist.

5. Verfahren nach Anspruch 1, wobei die Entfernungsrichtlinie ein oder mehrere definierte Kriterien umfasst, die erfüllt werden müssen, bevor Entfernung des Empfängers (38) als Empfänger von Meldungen des Ereignisses erlaubt wird.

6. Verfahren nach Anspruch 5, wobei das eine oder die mehreren definierten Kriterien mindestens eines aus einer Gruppe umfassen, die besteht aus: einer Tageszeit, zu welcher das Ereignis eintritt, und einem geografischen Aufenthaltsort des Empfängers (38).

7. Verfahren nach Anspruch 1, wobei die Entfernungsrichtlinie des Empfängers (38) ferner ein oder mehrere Kriterien zum automatischen Wiederhinzufügen des Empfängers (38) als Empfänger von Meldungen des Ereignisses umfasst, und das Verfahren ferner umfasst:
Wiederhinzufügen des Empfängers (38) als Empfänger von Meldungen des Ereignisses nach dem Entfernen des Empfängers (38) als Empfänger von Meldungen des Ereignisses bei Bestimmen, dass das eine oder die mehreren Kriterien zum automatischen Wiederhinzufügen des Empfängers (38) als Empfänger von Meldungen des Ereignisses erfüllt werden.

8. Verfahren nach Anspruch 1, wobei der eine oder die mehreren Empfänger (38) eine Mehrzahl von Empfängern (38) umfassen, und eine eigene Entfernungsrichtlinie für jeden von mindestens zweien der Mehrzahl von Empfängern (38) definiert wird.

9. Verfahren nach Anspruch 1, wobei der eine oder die mehreren Empfänger (38) eine Mehrzahl von Empfängern (38) umfassen, und die Entfernungsrichtlinie eine gemeinsame Entfernungsrichtlinie ist, die für alle oder einen Teilsatz der Mehrzahl von Empfängern (38) definiert wird.

10. Verfahren nach Anspruch 1, ferner umfassend:
Bestimmen vor dem Senden der Meldung an den Empfänger (38), ob die Meldung an den Empfänger (38) gesendet werden soll, basierend auf einer Meldungsrichtlinie des Empfängers (38); wobei
das Senden der Meldung an den Empfänger (38) ein Senden der Meldung an den Empfänger (38) bei Bestimmen, dass die Meldung an den Empfänger (38) gesendet werden soll, basierend auf der Meldungsrichtlinie des Empfängers (38) umfasst.

11. Verfahren nach Anspruch 10, wobei die Meldungsrichtlinie des Empfängers (38) auf einem oder mehreren definierten Kriterien basiert.

12. Verfahren nach Anspruch 11, wobei das eine oder die mehreren definierten Kriterien mindestens eines aus einer Gruppe umfassen, die besteht aus: einer Tageszeit und einem geografischen Aufenthaltsort des Empfängers (38).

13. Verfahren nach einem der Ansprüche 1 bis 12, ferner umfassend vor dem Senden der Meldung des Ereignisses an den einen oder die mehreren Empfänger (38):
Empfangen eines Abonnements für Meldungen des Ereignisses vom Abonnement-Ersteller (34), wobei das Abonnement ein Abonnement für Meldungen des Ereignisses für den einen oder die mehreren Empfänger (38) ist, und die Entfernungsrichtlinie für den Empfänger (38) mit dem Abonnement assoziiert ist.

14. Verfahren nach einem der Ansprüche 1 bis 12, ferner umfassend:
Empfangen einer Anforderung zum Bilden einer Gruppe (42), die den einen oder die mehreren Empfänger (38) umfasst;
Antworten auf die Anforderung zum Bilden der Gruppe (42) mit einer Gruppenkennung für die Gruppe (42); und
Empfangen einer Meldung des Ereignisses mit der Gruppenkennung als Kennung eines Empfängers (38) für die Meldung;
wobei das Senden der Meldung des Ereignisses an den einen oder die mehreren Empfänger (38) ein Senden der Meldung des Ereignisses an den einen oder die mehreren Empfänger (38) in der Gruppe (42) in Reaktion auf das Empfangen der Meldung des Ereignisses mit der Gruppenkennung als Kennung des Empfängers (38) für die Meldung umfasst.

15. Verfahren nach Anspruch 14, wobei die Meldung des Ereignisses, die an den einen oder die mehreren Empfänger (38) in der Gruppe (42) gesendet wird, die Gruppenkennung umfasst.

16. Verfahren nach Anspruch 14 oder 15, wobei das Entfernen des Empfängers (38) als Empfänger von Meldungen des Ereignisses ein Entfernen des Empfängers (38) als Empfänger von Meldungen des Ereignisses, aber nicht aus der Gruppe (42) umfasst.

17. Verfahren nach einem der Ansprüche 14 bis 16, wobei es sich bei dem einen oder den mehreren Empfängern (38) um einen Teilsatz von Empfängern (38) in der Gruppe (42) handelt, und ferner umfassend:
Empfangen einer Meldung eines anderen Ereignisses mit der Gruppenkennung, die eine Kennung eines Empfängers (38) der Meldung des anderen Ereignisses ist, und einer oder mehrerer Richtlinien für die Meldung des anderen Ereignisses; und
Senden der Meldung des anderen Ereignisses an einen Teilsatz der Mehrzahl von Empfängern (38) in der Gruppe (42) gemäß der einen oder den mehreren Richtlinien für die Meldung des anderen Ereignisses.

18. Verfahren nach Anspruch 17, ferner umfassend ein Empfangen einer oder mehrerer Meldungsrichtlinien für die Empfänger (38) in der Gruppe (42) für Meldungen des anderen Ereignisses, wobei die eine oder die mehreren Meldungsrichtlinien für die Empfänger (38) in der Gruppe (42) für Meldungen des anderen Ereignisses mindestens einen der Mehrzahl von Empfängern (38) in der Gruppe (42) identifizieren, der keine Meldungen des anderen Ereignisses empfangen soll.

19. Common Services Entity-,CSE-,Knoten (44) in einem Maschine-zu-Maschine-,M2M-,Kommunikationssystem (32), der eine Entfernung eines Meldungsempfängers (38) ermöglicht und umfasst:
Mittel zum Senden einer Meldung eines Ereignisses an einen oder mehrere Empfänger (38), wobei der eine oder die mehreren Empfänger (38) ein Abonnement für Meldungen des Ereignisses durch einen Abonnement-Ersteller (34) haben und vom Abonnement-Ersteller (34) verschieden sind;
Mittel zum Empfangen einer Entfernungsanforderung von einem Empfänger (38) des einen oder der mehreren Empfänger (38), wobei die Entfernungsanforderung eine Anforderung zum Entfernen des Empfängers (38) als Empfänger von Meldungen des Ereignisses ist;
Mittel zum Bestimmen, ob Entfernung des Empfängers (38) als Empfänger von Meldungen des Ereignisses erlaubt ist, basierend auf einer Entfernungsrichtlinie für den Empfänger (38);
Mittel zum Bestimmen, ob die Entfernungsrichtlinie eine Genehmigung vom Abonnement-Ersteller (34) erfordert, wobei die Entfernungsrichtlinie anzeigt, dass eine Genehmigung des Abonnement-Erstellers (34) erforderlich ist, bevor Entfernung des Empfängers (38) erlaubt wird, wobei das Bestimmen, ob Entfernung des Empfängers (38) als Empfänger von Meldungen des Ereignisses erlaubt ist, ein Anfordern einer Genehmigung zum Entfernen des Empfängers (38) als Empfänger von Meldungen des Ereignisses vom Abonnement-Ersteller (34) und Bestimmen, dass Entfernung des Empfängers (38) als Empfänger von Meldungen des Ereignisses erlaubt ist, bei Empfang einer Genehmigung vom Abonnement-Ersteller (34) umfasst; und
Mittel zum Entfernen des Empfängers (38) als Empfänger von Meldungen des Ereignisses bei Bestimmen, dass Entfernung des Empfängers (38) als Empfänger von Meldungen des Ereignisses erlaubt ist.

20. Computerprogramm, umfassend Anweisungen, die bei Ausführung auf mindestens einem Prozessor den mindestens einen Prozessor zum Durchführen des Verfahrens nach einem der Ansprüche 1 bis 18 veranlassen.

21. Datenträger, der das Computerprogramm nach Anspruch 20 enthält, wobei der Datenträger eines von einem elektronischen Signal, einem optischen Signal, einem Funksignal oder einem computerlesbaren Speichermedium ist.

## Revendications

1. Procédé de fonctionnement d'un nœud d'entité de services communs, CSE, (34, 36) dans un système de communication de machine à machine, M2M, (32) pour permettre la suppression d'un destinataire de notifications (38), comprenant :
l'envoi d'une notification d'un événement à un ou plusieurs destinataires (38), les un ou plusieurs destinataires (38) étant abonnés à des notifications de l'événement par un initiateur d'abonnement (34) et étant différents de l'initiateur d'abonnement (34) ;
la réception d'une demande de suppression en provenance d'un destinataire (38) parmi les un ou plusieurs destinataires (38), la demande de suppression étant une demande pour supprimer le destinataire (38) en tant qu'un destinataire de notifications de l'événement ;
la détermination si une suppression du destinataire (38) en tant qu'un destinataire de notifications de l'événement est permise sur la base d'une politique de suppression pour le destinataire (38) ;
la détermination si la politique de suppression exige une autorisation de l'initiateur d'abonnement (34), dans lequel la politique de suppression indique qu'une autorisation de l'initiateur d'abonnement (34) est exigée avant qu'une suppression du destinataire (38) soit permise, et la détermination si une suppression du destinataire (38) en tant qu'un destinataire de notifications de l'événement est permise comprend la demande d'une autorisation de suppression du destinataire (38) en tant qu'un destinataire de notifications de l'événement à l'initiateur d'abonnement (34), et la détermination qu'une suppression du destinataire (38) en tant qu'un destinataire de notifications de l'événement est permise à la réception d'une autorisation de l'initiateur d'abonnement (34) ; et
la suppression du destinataire (38) en tant qu'un destinataire de notifications de l'événement à la détermination qu'une suppression du destinataire (38) en tant qu'un destinataire de notifications de l'événement est permise.

2. Procédé selon la revendication 1, comprenant en outre le refus d'une suppression du destinataire (38) en tant qu'un destinataire de notifications de l'événement à la détermination qu'une suppression du destinataire (38) en tant qu'un destinataire de notifications de l'événement n'est pas permise.

3. Procédé selon la revendication 1, dans lequel la politique de suppression indique si une autorisation de l'initiateur d'abonnement (34) est exigée avant qu'une suppression du destinataire (38) soit permise.

4. Procédé selon la revendication 1, dans lequel la politique de suppression indique qu'une autorisation de l'initiateur d'abonnement (34) n'est pas exigée avant qu'une suppression du destinataire (38) soit permise, et la détermination si une suppression du destinataire (38) en tant qu'un destinataire de notifications de l'événement est permise comprend la détermination si une suppression du destinataire (38) en tant qu'un destinataire de notifications de l'événement est permise sans entrée de l'initiateur d'abonnement (34).

5. Procédé selon la revendication 1, dans lequel la politique de suppression comprend un ou plusieurs critères définis qui doivent être satisfaits avant qu'une suppression du destinataire (38) en tant qu'un destinataire de notifications de l'événement soit permise.

6. Procédé selon la revendication 5, les un ou plusieurs critères définis comprennent au moins l'un d'un groupe se composant de : une heure de la journée à laquelle l'événement se produit et un emplacement géographique du destinataire (38).

7. Procédé selon la revendication 1, dans lequel la politique de suppression du destinataire (38) comprend en outre un ou plusieurs critères pour rajouter automatiquement le destinataire (38) en tant qu'un destinataire de notifications de l'événement, et le procédé comprend en outre :
après la suppression du destinataire (38) en tant qu'un destinataire de notifications de l'événement, le rajout du destinataire (38) en tant qu'un destinataire de notifications de l'événement à la détermination que les un ou plusieurs critères pour rajouter automatiquement le destinataire (38) en tant qu'un destinataire de notifications de l'événement sont satisfaits.

8. Procédé selon la revendication 1, dans lequel les un ou plusieurs destinataires (38) comprennent une pluralité de destinataires (38), et une politique de suppression distincte est définie pour chacun d'au moins deux de la pluralité de destinataires (38).

9. Procédé selon la revendication 1, dans lequel les un ou plusieurs destinataires (38) comprennent une pluralité de destinataires (38), et la politique de suppression est une politique de suppression commune définie pour l'intégralité ou un sous-ensemble de la pluralité de destinataires (38).

10. Procédé selon la revendication 1, comprenant en outre :
avant l'envoi de la notification au destinataire (38), la détermination si la notification doit être envoyée au destinataire (38) sur la base d'une politique de notification du destinataire (38) ; et
l'envoi de la notification au destinataire (38) comprend l'envoi de la notification au destinataire (38) à la détermination que la notification doit être envoyée au destinataire (38) sur la base de la politique de notification du destinataire (38).

11. Procédé selon la revendication 10, dans lequel la politique de notification du destinataire (38) est basée sur un ou plusieurs critères définis.

12. Procédé selon la revendication 11, dans lequel les un ou plusieurs critères définis comprennent au moins l'un d'un groupe se composant de : une heure de la journée et un emplacement géographique du destinataire (38).

13. Procédé selon l'une quelconque des revendications 1 à 12, comprenant en outre, avant l'envoi de la notification de l'événement aux un ou plusieurs destinataires (38) :
la réception d'un abonnement à des notifications de l'événement en provenance de l'initiateur d'abonnement (34), dans lequel l'abonnement est un abonnement à des notifications de l'événement pour les un ou plusieurs destinataires (38) et la politique de suppression pour le destinataire (38) est associée à l'abonnement.

14. Procédé selon l'une quelconque des revendications 1 à 12, comprenant en outre :
la réception d'une demande de création d'un groupe (42) comprenant les un ou plusieurs destinataires (38) ;
la réponse à la demande de création du groupe (42) avec un identifiant de groupe pour le groupe (42) ; et
la réception d'une notification de l'événement avec l'identifiant de groupe en tant qu'un identifiant d'un destinataire (38) pour la notification ;
dans lequel l'envoi de la notification de l'événement aux un ou plusieurs destinataires (38) comprend l'envoi de la notification de l'événement aux un ou plusieurs destinataires (38) dans le groupe (42) en réponse à la réception de la notification de l'événement avec l'identifiant de groupe en tant que l'identifiant du destinataire (38) pour la notification.

15. Procédé selon la revendication 14, dans lequel la notification de l'événement envoyée aux un ou plusieurs destinataires (38) dans le groupe (42) comprend l'identifiant de groupe.

16. Procédé selon la revendication 14 ou 15, dans lequel la suppression du destinataire (38) en tant qu'un destinataire de notifications de l'événement comprend la suppression du destinataire (38) en tant qu'un destinataire de notifications de l'événement mais pas du groupe (42).

17. Procédé selon l'une quelconque des revendications 14 à 16, dans lequel les un ou plusieurs destinataires (38) sont un sous-ensemble d'une pluralité de destinataires (38) dans le groupe (42), et comprenant en outre :
la réception d'une notification d'un événement différent avec l'identifiant de groupe qui est un identifiant d'un destinataire (38) de la notification de l'événement différent et une ou plusieurs politiques pour la notification de l'événement différent ; et
l'envoi de la notification de l'événement différent à un sous-ensemble de la pluralité de destinataires (38) dans le groupe (42) selon les une ou plusieurs politiques pour la notification de l'événement différent.

18. Procédé selon la revendication 17, comprenant en outre la réception d'une ou plusieurs politiques de notification pour les destinataires (38) dans le groupe (42) pour des notifications de l'événement différent, dans lequel les une ou plusieurs politiques de notification pour les destinataires (38) dans le groupe (42) pour des notifications de l'événement différent identifient au moins l'un de la pluralité de destinataires (38) dans le groupe (42) qui ne doit pas recevoir de notifications de l'événement différent.

19. Nœud d'entité de services communs, CSE, (44) dans un système de communication de machine à machine, M2M, (32) qui permet une suppression d'un destinataire de notifications (38), comprenant :
un moyen pour l'envoi d'une notification d'un événement à un ou plusieurs destinataires (38), les un ou plusieurs destinataires (38) étant abonnés à des notifications de l'événement par un initiateur d'abonnement (34) et étant différents de l'initiateur d'abonnement (34) ;
un moyen pour la réception d'une demande de suppression en provenance d'un destinataire (38) parmi les un ou plusieurs destinataires (38), la demande de suppression étant une demande pour supprimer le destinataire (38) en tant qu'un destinataire de notifications de l'événement ;
un moyen pour la détermination si une suppression du destinataire (38) en tant qu'un destinataire de notifications de l'événement est permise sur la base d'une politique de suppression pour le destinataire (38) ;
un moyen pour la détermination si la politique de suppression exige une autorisation de l'initiateur d'abonnement (34), dans lequel la politique de suppression indique qu'une autorisation de l'initiateur d'abonnement (34) est exigée avant qu'une suppression du destinataire (38) soit permise, et la détermination si une suppression du destinataire (38) en tant qu'un destinataire de notifications de l'événement est permise comprend la demande d'une autorisation de suppression du destinataire (38) en tant qu'un destinataire de notifications de l'événement à l'initiateur d'abonnement (34), et la détermination qu'une suppression du destinataire (38) en tant qu'un destinataire de notifications de l'événement est permise à la réception d'une autorisation de l'initiateur d'abonnement (34) ; et
un moyen pour la suppression du destinataire (38) en tant qu'un destinataire de notifications de l'événement à la détermination qu'une suppression du destinataire (38) en tant qu'un destinataire de notifications de l'événement est permise.

20. Programme informatique comprenant des instructions qui, lorsqu'elles sont exécutées sur au moins un processeur, amènent l'au moins un processeur à réaliser le procédé selon l'une quelconque des revendications 1 à 18.

21. Porteuse contenant le programme informatique selon la revendication 20, dans laquelle la porteuse est l'un d'un signal électronique, d'un signal optique, d'un signal radio ou d'un support de stockage lisible par ordinateur.
